(19) Europäisches Patentamt / European Patent Office / Office européen des brevets

(11) **EP 3 511 110 A1**

(12) **EUROPEAN PATENT APPLICATION**
published in accordance with Art. 153(4) EPC

(43) Date of publication:
**17.07.2019  Bulletin 2019/29**

(51) Int Cl.:
**B23K 35/368** *(2006.01)*    **B23K 35/30** *(2006.01)*

(21) Application number: **17848818.5**

(86) International application number:
**PCT/JP2017/032177**

(22) Date of filing: **06.09.2017**

(87) International publication number:
**WO 2018/047880 (15.03.2018 Gazette 2018/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.09.2016  JP 2016174096**

(71) Applicant: **Kabushiki Kaisha Kobe Seiko Sho
(Kobe Steel, Ltd.)
Kobe-shi, Hyogo 651-8585 (JP)**

(72) Inventors:
• **OKAZAKI Yoshitomi
Hyogo 651-2271, (JP)**

• **SHIMAMOTO Masaki
Hyogo 651-2271, (JP)**
• **NAKO Hidenori
Hyogo 651-2271, (JP)**
• **ISONO Shinya
Kanagawa 251-8551 (JP)**
• **TAKAWA Mana
Kanagawa 251-8551 (JP)**
• **SASAKURA Shuji
Kanagawa 251-8551 (JP)**
• **YAMAKAMI Masafumi
Kanagawa 251-8551 (JP)**
• **ISHIZAKI Keito
Kanagawa 251-8551 (JP)**

(74) Representative: **Müller-Boré & Partner
Patentanwälte PartG mbB
Friedenheimer Brücke 21
80639 München (DE)**

(54) **FLUX-CORED WIRE FOR GAS SHIELD ARC WELDING, AND WELD METAL**

(57)    The present invention pertains to a flux-cored wire for gas shield arc welding containing, with respect to the total mass of the wire: 0.03-0.12 mass% of C; 0.20-0.70 mass% of Si in terms of the Si in a Si alloy and a Si compound; 1.0-4.0 mass% of Mn; 2.4-4.5 mass% of Ti in terms of the Ti in a Ti alloy and a Ti compound; 0.005-0.050 mass% of Al; 0.01-0.10 mass% of Li in terms of the Li in a Li alloy and a Li compound; at least one among 0.30-3.50 mass% of Ni and 0.0008-0.012 mass% of B; and 80 mass% or more of Fe, wherein Li/Si≥0.05 is satisfied.

**Description**

TECHNICAL FIELD

The present invention relates to a flux-cored wire for gas-shielded arc welding that enables to obtain a weld metal having good low-temperature toughness, and the weld metal.

BACKGROUND ART

In recent years, energy development is expanding into colder regions and waters, and a cryogenic steel has been used for a structure in such cold regions and cold waters. However, for the structure in these cold regions and cold waters, a structure design in consideration of weather conditions in the regions and waters where the structure operates has been executed in addition to the conventional requirement for low-temperature toughness, and a steel material having higher toughness is demanded. Furthermore, for the purpose of achieving high efficiency and deskilling of welding, a requirement for application of a flux-cored wire to welding of this kind of cryogenic steel is increasing.

Based on such background, Patent Literature 1 discloses a technique that the toughness at low temperatures is enhanced by controlling the chemical components and the amount of solute Ti of the weld metal. In the technique described in Patent Literature 1, attention is focused on the formation of acicular ferrite inside prior $\gamma$ grains.

In addition, Patent Literature 2 discloses a flux-cored wire for gas-shielded arc welding for a high tensile steel having a tensile strength of 680 N/mm$^2$ class or more. In the technique described in Patent Literature 2, strength corresponding to the base metal strength and good toughness are ensured in a wide range of use from small heat input to large heat input by specifying appropriate ranges for the contents of C, Si, Mn, P, S, Ni, Cr and Mo based on the total weight of wire and specifying the addition amount of Ta, and furthermore, the weight ratio of metal powders in the flux is specified for enhancing the operating efficiency.

CITATION LIST

PATENT LITERATURE

Patent Literature 1: JP-A-2000-263283
Patent Literature 2: JP-A-H03-294093

SUMMARY OF INVENTION

TECHNICAL PROBLEM

However, in Patent Literature 1, toughness is enhanced by reducing formation of acicular ferrite inside the prior $\gamma$ grains, but attention is not paid to the viewpoint of alleviating stress concentration on inclusions or the viewpoint of reducing the brittle fracture rate of the weld metal. Accordingly, the toughness of the weld metal when welding a cryogenic steel is not sufficient.

In Patent Literature 2, attention is not paid to the viewpoint of alleviating stress concentration on inclusions or the viewpoint of reducing the brittle fracture rate of the weld metal. Accordingly, the toughness of the weld metal when welding a cryogenic steel is not sufficient.

The present invention has been made in consideration of these problems, and an object of the present invention is to provide a flux-cored wire enabling to obtain a weld metal having good low-temperature toughness when assembling a structure by gas-shielded arc welding of a cryogenic steel and achieve good welding workability, and to provide the weld metal.

SOLUTION TO PROBLEM

As described above, in Patent Literatures 1 and 2, the brittle fracture rate is not studied. Here, the brittle fracture rate indicates a percentage of brittle fracture occurring when a load is applied in a Charpy impact test. In a region where brittle fracture occurred, the energy absorbed until reaching fracture by a steel material is extremely reduced, and the fracture easily proceeds. Accordingly, in particular for inhibiting the fracture at low temperatures, a requirement to not only improve an absorption energy at low temperatures in a general Charpy impact test but also prevent the formation of a brittle fracture surface is considered to be very important.

In addition, as described above, energy development is expanded into colder regions and waters and as for a structure in such cold regions and cold waters, the low-temperature toughness is required to be improved, but it is important particularly for a structure used at low temperatures to avoid an unstable fracture involving the brittle fracture and more increase the safety of the structure used in a low-temperature environment. Here, in a low alloy steel weld metal formed by gas-shielded arc welding, a large amount of oxygen is contained, and most thereof is present as an oxide-based inclusion in the weld metal. At the time of fracture of the weld metal, stress concentration occurs around the oxide-based inclusion, and particularly, in a low-temperature environment, the brittle fracture is expected to be promoted by stress concentration around the oxide-based inclusion. Therefore, in order to more increase the safety of a structure used at low temperatures, the brittle fracture needs to be avoided, and it is considered to be important to alleviate stress concentration on an oxide-based inclusion.

Based on these considerations, the present inventors have studied a technique for alleviating stress concentration on oxide-based inclusions. As a result, it has been newly found that reducing the glass phase present in an oxide-based inclusion is effective. The oxide-based inclusion is a composite phase composed of a glass phase and other various crystal phases. Here, the Young's modulus of the glass phase is low compared with the base metal phase of the weld metal and since stress is likely to concentrate on the glass phase having a low Young's modulus, compared with the base metal phase, when many glass phases are present in the oxide-based inclusions, the brittle fracture readily occurs.

The present inventors hence made investigations on means for reducing the glass phase in the oxide-based inclusion, in order to inhibit brittle fracture. Furthermore, the present inventors, giving attention to the fact that the glass phase mainly includes $SiO_2$, made further investigations on methods for reducing the amount of $SiO_2$ in the oxide-based inclusion of the weld metal.

With respect to the reduction of a glass phase, the present inventors conceived of adding Li to promote the crystallization of the oxide-based inclusion and to control the crystal structure formed through crystallization to be cubic. According to the present inventors' knowledge, a cubic crystal structure shows excellent symmetry and well matches with the iron ferrite phase. The cubic crystals hence function as transformation nuclei for acicular ferrite to render the weld metal structure exceedingly fine, thereby obtaining the effect of reducing the brittle fracture rate. Furthermore, in order to control the oxide-based inclusion so as to have a cubic crystal structure, the present inventors controlled the ratio (Li/Si) between the addition amounts of Li and Si contained in a wire, Si being an element which forms an $SiO_2$ glass phase. The present inventors have found, based on such knowledge, that a weld metal can be improved in terms of not only low-temperature absorption energy but also low-temperature brittle fracture rate in a Charpy impact test (hereinafter referred to also as "first finding").

The present inventors further made investigations on means for improving the low-temperature toughness of a weld metal formed by gas-shielded arc welding using a flux-cored wire, in particular reducing the brittle fracture rate, and have found that the brittle fracture rate is improved by making the inclusions acting as a start point for brittle fracture harmless. The reason why inclusions act as a start point for fracture is that the inclusions differ from the steel in deformability (Young's modulus), and stress concentration hence occurs in the matrix on the periphery of the inclusions and promotes the brittle fracture. The present inventors have found that by making the Young's modulus of the inclusions close to the Young's modulus of the steel, the stress concentration is reduced and the brittle fracture is inhibited.

Specifically, Ca, which is a highly deoxidizing element, was added to a wire to reduce the Si during the welding to thereby diminish glass inclusions (Si-based) having a lower Young's modulus than the matrix. In addition, the present inventors made investigations on means for increasing the amount of a fine acicular ferrite (AF) structure, which is formed from inclusions as a start point and is effective in improving the low-temperature toughness, and succeeded in obtaining an AF structure enough to improve the low-temperature toughness, by suitably controlling the composition of inclusions and regulating the components (essential addition of Ni and B) so as to inhibit the formation of intergranular bainite, which is a competitive structure.

The present inventors made it clear that in a weld metal formed from an Li-containing flux-cored wire, the matrix on the periphery of inclusions has a layer having a low Mn concentration, which is called an Mn-depleted layer, to promote AF formation, and found that the effect of promoting AF formation is enhanced by regulating the Mn amount in the weld metal to or above a given value. In addition, the present inventors found that a layer of a Ti-rich phase which satisfactorily matches in lattice with the matrix is formed at the interface between the glass phase in the inclusions and the matrix and the Ti-rich phase effectively functions as AF-formation nuclei.

The present inventors have found that by utilizing such functions of the Mn-depleted layer and the Ti-rich phase, an exceedingly fine AF structure is obtained even in an unmodified portion, which generally is prone to have coarse structures (hereinafter referred to also as "second finding").

An embodiment based on the first finding (this embodiment is hereinafter referred to also as "first embodiment") relates to a flux-cored wire for gas-shielded arc welding, containing, based on total mass of the wire:

C: from 0.03 to 0.12 mass%;

Si in terms of Si in Si alloy and Si compound: from 0.20 to 0.70 mass%;
Mn: from 1.0 to 4.0 mass%;
Ti in terms of Ti in Ti alloy and Ti compound: from 2.4 to 4.5 mass%;
Al: from 0.005 to 0.050 mass%;
Li in terms of Li in Li alloy and Li compound: from 0.01 to 0.10 mass%;
at least one of Ni: from 0.30 to 3.50 mass% and B: from 0.0008 to 0.012 mass%; and
Fe: 80 mass% or more, and
satisfying Li/Si≥0.05.

The flux-cored wire for gas-shielded arc welding above may further contain at least one member selected from the group consisting of, based on the total mass of the wire: $ZrO_2$: from 0.02 to 0.50 mass%; and $Al_2O_3$: from 0.02 to 0.80 mass%.

The flux-cored wire for gas-shielded arc welding above may further contain at least one member selected from the group consisting of, based on the total mass of the wire: Cu: 0.40 mass% or less; Cr: 1.0 mass% or less; Mo: 0.35 mass% or less; Nb: 0.030 mass% or less; and V: 0.050 mass% or less.

The flux-cored wire for gas-shielded arc welding above may further contain at least one member selected from the group consisting of, based on the total mass of the wire: a total of Na and K: 1.0 mass% or less; and Ca: 1.0 mass% or less.

The flux-cored wire for gas-shielded arc welding above may further contain, based on the total mass of the wire: Mg: 1.0 mass% or less.

The flux-cored wire for gas-shielded arc welding above may further contain, based on the total mass of the wire: F: 1.0 mass% or less.

One preferred embodiment of the flux-cored wire for gas-shielded arc welding above contains both of Ni: from 0.80 to 3.50 mass% and B: from 0.0008 to 0.012 mass%.

This embodiment further relates to a weld metal, containing:

C: from 0.04 to 0.12 mass%;
Si: from 0.10 to 0.50 mass%;
Mn: from 0.80 to 3.00 mass%;
Ti: from 0.030 to 0.100 mass%;
Al: from 0.002 to 0.010 mass%;
O: from 0.030 to 0.070 mass%;
N: more than 0 and 0.01 mass% or less; and
at least one of Ni: from 0.30 to 3.50 mass% and B: from 0.0005 to 0.0070 mass%,
with the remainder consisting of Fe and inevitable impurities,
wherein oxide-based inclusions having a minor diameter of 1 $\mu$m or more contained in the weld metal satisfy the following requirements (1) and (2):

(1) an average composition of the oxide-based inclusions having a minor diameter of 1 $\mu$m or more contained in the weld metal satisfies, by mass%,

$$Al_2O_3+MnO+TiO_2 \geq 50\%;$$

(2) the oxide-based inclusions having a minor diameter of 1 $\mu$m or more contained in the weld metal include a particle including an oxide phase having a cubic crystal structure.

The weld metal above may further contain at least one member selected from the group consisting of: Cu: 0.40 mass% or less; Cr: 1.0 mass% or less; Mo: 0.35 mass% or less; Nb: 0.020 mass% or less; and V: 0.050 mass% or less.

A preferred embodiment of the weld metal is a weld metal, containing both of Ni: from 0.80 to 3.50 mass% and B: from 0.0005 to 0.0070 mass%,
wherein a rate of acicular ferrite formation defined by the following formula is 15% or more:

$$\text{Rate of acicular ferrite formation (\%)} = (\text{number of inclusions acting as a start point of acicular ferrite})/(\text{number of all inclusions}) \times 100$$

In addition, another embodiment based on the second finding (this embodiment is hereinafter referred to also as "second embodiment") relates to a flux-cored wire for gas-shielded arc welding, containing, based on total mass of the wire:

C: from 0.03 to 0.12 mass%;
Si in terms of Si in Si alloy and Si compound: from 0.20 to 0.36 mass%;
Mn: from 2.5 to 3.3 mass%;
Ti in terms of Ti in Ti alloy and Ti compound: from 2.4 to 4.0 mass%;
Ni: from 1.00 to 3.50 mass%;
B: more than 0 and 0.012 mass% or less;
Ca: from 0.03 to 1.0 mass%;
Li in terms of Li in Li alloy and Li compound: from 0.01 to 0.10 mass%; and
Fe: 80 mass% or more.

The flux-cored wire for gas-shielded arc welding above may further contain at least one member selected from the group consisting of, based on the total mass of the wire: $ZrO_2$: from 0.02 to 0.50 mass%; and $Al_2O_3$: from 0.02 to 0.80 mass%.

The flux-cored wire for gas-shielded arc welding above may further contain at least one member selected from the group consisting of, based on the total mass of the wire: Al: from 0.005 to 0.050 mass%; Cu: 0.40 mass% or less; Cr: 1.0 mass% or less; Mo: 0.35 mass% or less; Nb: 0.030 mass% or less; V: 0.050 mass% or less; and V: 0.050 mass% or less.

The flux-cored wire for gas-shielded arc welding above may further contain, based on the total mass of the wire: a total of Na and K: 1.0 mass% or less.

The flux-cored wire for gas-shielded arc welding above may further contain, based on the total mass of the wire: Mg: 1.0 mass% or less.

The flux-cored wire for gas-shielded arc welding above may further contain, based on the total mass of the wire: F: 1.0 mass% or less.

This embodiment also relates to a weld metal, containing:

C: from 0.04 to 0.12 mass%;
Si: from 0.20 to 0.32 mass%;
Mn: from 1.80 to 2.30 mass%;
Ti: from 0.030 to 0.090 mass%;
Ni: from 1.00 to 3.50 mass%;
B: more than 0 and 0.0070 mass% or less;
Ca: from 0.0003 to 0.010 mass%;
N: more than 0 and 0.01 mass% or less;
O: from 0.030 to 0.070 mass%,
with the remainder consisting of Fe and inevitable impurities,
wherein a rate of acicular ferrite formation defined by the following formula is 15% or more:

$$\text{Rate of acicular ferrite formation (\%)} = (\text{number of inclusions acting as a start point of acicular ferrite/number of all inclusions}) \times 100$$

The weld metal above may further contain at least one member selected from the group consisting of: Al: from 0.002 to 0.010 mass%; Cu: 0.40 mass% or less; Cr: 1.0 mass% or less; Mo: 0.35 mass% or less; Nb: 0.020 mass% or less; V: 0.050 mass% or less.

According to the present invention, low-temperature toughness which has not been attained in conventional weld metals can be obtained and, hence, the safety of structures to be used in low-temperature environments can be further heightened.

DESCRIPTION OF EMBODIMENTS

The embodiments for carrying out the present invention are described in detail below. However, the present invention is not limited to the following embodiments.

[First Embodiment]

<Flux-Cored Wire for Gas-Shielded Arc Welding>

The flux-cored wire for gas-shielded arc welding (hereinafter, sometimes simply referred to as "flux-cored wire" or "wire") of this embodiment contains, based on total mass of the wire, C: from 0.03 to 0.12 mass%, Si in terms of Si in Si alloy and Si compound: from 0.20 to 0.70 mass%, Mn: from 1.0 to 4.0 mass%, Ti in terms of Ti in Ti alloy and Ti compound: from 2.4 to 4.5 mass%, Al: from 0.005 to 0.050 mass%, Li in terms of Li in Li alloy and Li compound: from 0.01 to 0.10 mass%, at least one of Ni: from 0.30 to 3.50 mass% and B: from 0.0008 to 0.012 mass%, and Fe: 80 mass% or more, and satisfies Li/Si≥0.05.

The reason for numerical limitation on the amount of each component contained in the flux-cored wire for gas-shielded arc welding of this embodiment is described below. In the following, the amount of each component in the flux-cored wire for gas-shielded arc welding is a content based on the total mass of the flux-cored wire for gas-shielded arc welding, i.e., a content based on the total mass of the wire.

In addition, in the present description, the percentage on a mass basis (mass%) has the same meaning as the percentage on a weight basis (wt%). Furthermore, the numerical range expressed using "to" means to be equal to or more than the lower limit and equal to or less than the upper limit.

(C: from 0.03 to 0.12 mass%)

C is an element effective in enhancing the strength of the weld metal. However, if the amount of C is excessive, the strength may increase excessively, causing deterioration of the toughness. On the other hand, if the amount of C is too small, a lack of strength may be caused and coarse grain boundary ferrite, which adversely affects the toughness, is formed.

From these viewpoints, the C amount in the wire is 0.12% or less, preferably 0.09% or less, more preferably 0.08% or less. In addition, the C amount in the wire is 0.03% or more, preferably 0.04% or more, more preferably 0.05% or more.

(Si in terms of Si in Si alloy and Si compound: from 0.20 to 0.70 mass%)

Si is an element acting as a deoxidizer and is also important in controlling the glass phase of an oxide-based inclusion. However, if the amount of Si is excessive, the glass phase of an oxide-based inclusion may increase, leading to a reduction in the toughness. On the other hand, if the amount of Si is too small, a blowhole may be formed due to insufficient deoxidation, or the welding workability may be reduced.

From these viewpoints, the Si amount in the wire is, in terms of Si in an Si alloy and an Si compound, 0.70% or less, preferably 0.60% or less, more preferably 0.50% or less. In addition, the Si amount in the wire is, in terms of Si in an Si alloy and an Si compound, 0.20% or more, preferably 0.25% or more, more preferably 0.30% or more.

Here, examples of the Si source also include potash glass and soda glass, besides $SiO_2$, $K_2SiF_6$, etc.

(Mn: from 1.0 to 4.0 mass%)

Mn acts as a deoxidizer and is an element affecting the strength and toughness. However, if the amount of Mn is excessive, the strength may increase excessively and the hardenability during quenching may increase excessively, leading to a reduction in the toughness. On the other hand, if the amount of Mn is too small, a lack of strength may be caused and coarse grain boundary ferrite, which adversely affects the toughness, is formed.

From these viewpoints, the Mn amount in the wire is 4.0% or less, preferably 3.0% or less, more preferably 2.7% or less. In addition, the Mn amount in the wire is 1.0% or more, preferably 2.3% or more, more preferably 2.6% or more.

(Ti in terms of Ti in Ti alloy and Ti compound: from 2.4 to 4.5 mass%)

Ti is an element acting as a deoxidizer, and an oxide-based inclusion thereof acts as a nucleus of acicular ferrite. However, if the amount of Ti is excessive, an excess of solute Ti may be formed and not only the strength may increase excessively but also the toughness may deteriorate. On the other hand, if the amount of Ti is too small, ferrite may be coarsened, causing deterioration of the toughness.

From these viewpoints, the Ti amount in the wire is, in terms of Ti in Ti alloy and Ti compound, 4.5% or less, preferably 3.6% or less, more preferably 3.2% or less. In addition, the Ti amount in the wire is, in terms of Ti in Ti alloy and Ti compound, 2.4% or more, preferably 2.6% or more, more preferably 2.8% or more.

Here, examples of the Ti source include $TiO_2$, etc.

(Al: from 0.005 to 0.050 mass%)

Al is an element acting as a deoxidizer. However, if the amount of Al is excessive, nucleation of acicular ferrite may be prevented, causing deterioration of the toughness. On the other hand, if the amount of Al is too small, a blowhole may be formed due to insufficient deoxidation.
From these viewpoints, the Al amount in the wire is 0.050% or less, preferably 0.048% or less, more preferably 0.045% or less. In addition, the Al amount in the wire is 0.005% or more, preferably 0.008% or more, more preferably 0.015% or more.

(Li in terms of Li in Li alloy and Li compound: from 0.01 to 0.10 mass%)

Li is an element controlling the crystal structure of the oxide-based inclusion in the weld metal so as to be cubic. However, if the amount of Li is excessive, the hygroscopicity resistance of the wire may deteriorate, causing problems concerning cold cracking resistance and porosity resistance. On the other hand, if the amount of Li is too small, the crystal structure of the oxide-based inclusion cannot be sufficiently controlled so as to be cubic, and the toughness may deteriorate.
From those standpoints, the amount of Li in the wire, in terms of Li in Li alloy and Li compound, is 0.10% or less, preferably 0.08% or less, more preferably 0.06% or less. Meanwhile, the amount of Li in the wire, in terms of Li in Li alloy and Li compound, is 0.01% or more, preferably 0.02% or more, more preferably 0.03% or more.

(At least one of Ni: from 0.30 to 3.50 mass% and B: from 0.0008 to 0.012 mass%)

Ni is an element having an action of enhancing the toughness of the weld metal and also has an action of promoting acicular ferrite formation by retarding the formation of a grain boundary bainite structure competing with acicular ferrite. However, if the amount of Ni is excessive, high-temperature cracking may occur. In addition, the amount of martensite formed may increase to raise the strength and in turn, the Charpy impact absorption energy may decrease. On the other hand, if the amount of Ni is too small, the toughness may deteriorate.
Similarly, B is an element having an action of enhancing the toughness of the weld metal and contributes to a reduction in the brittle fracture rate at low temperatures by reducing grain boundary ferrite, which adversely affects the toughness. However, if the amount of B is excessive, high-temperature cracking may occur. On the other hand, if the amount of B is too small, the toughness may deteriorate.
The wire of this embodiment contains at least one of Ni and B in a specific amount range.
More specifically, in the case of containing Ni, from the above-described viewpoint, the Ni amount in the wire is 3.50% or less, preferably 3.00% or less, more preferably 2.50% or less. In addition, the Ni amount in the wire is 0.30% or more, preferably 0.50% or more, more preferably 1.50% or more.
In the case of containing B, from the above-described viewpoint, the B amount in the wire is 0.012% or less, preferably 0.010% or less, more preferably 0.007% or less. In addition, the B amount in the wire is 0.0008% or more, preferably 0.0010% or more, more preferably 0.0015% or more.

(Li/Si≥0.05)

Li/Si is a parameter indicative of the proportion of the oxide-based inclusion having a cubic crystal structure in the oxide-based inclusion contained in the weld metal.
If Li/Si is too small, the oxide-based inclusion having a cubic crystal structure may decrease and a glass phase may increase, causing deterioration of the toughness. Accordingly, in the wire according to this embodiment, Li/Si is 0.05 or more, preferably 0.07 or more, more preferably 0.10 or more.

(Fe and inevitable impurities)

The remainder of the flux-cored wire of this embodiment consists of Fe and inevitable impurities.
Fe of the remainder includes Fe constituting the outer shell, an iron powder added to the flux, and Fe of an alloy powder. The flux-cored wire of this embodiment contains Fe in an amount of 80 mass% or more, preferably 82 mass% or more, more preferably 84 mass% or more.
The upper limit of the amount of Fe is not particularly limited but the amount of Fe is, for example, 96 mass% or less in relation to other component composition.
Examples of the inevitable impurities of the remainder include P, S, Sn, Pb, Sb, etc.

Furthermore, in the flux-cored wire of this embodiment, an alloy element other than the above-described elements, a slag forming agent, an arc stabilizer, etc. may be added in addition to each of the components described above, as long as the effects of the present invention are not inhibited. In the case where each element is added as an oxide or a nitride, the remainder of the flux-cored wire of this embodiment contains O or N as well.

Furthermore, in addition to each of the components described above, the flux-cored wire of this embodiment may further contain a predetermined amount of at least one of the following components.

(Cu: 0.40 mass% or less)

Cu is an element effective in ensuring the strength of the weld metal. However, if the amount of Cu is excessive, the strength may increase excessively, causing deterioration of the toughness.

From these viewpoints, in the case of incorporating Cu into the wire, it is sufficient as long as the Cu amount in the wire is more than 0%, but the amount is preferably 0.01% or more, more preferably 0.05% or more, still more preferably 0.10% or more. In addition, the Cu amount in the wire is preferably 0.40% or less, more preferably 0.30% or less, still more preferably 0.25% or less.

(Cr: 1.0 mass% or less)

Cr is an element effective in ensuring the strength of the weld metal. However, if the amount of Cr is excessive, the strength may increase excessively, causing deterioration of the toughness.

From these viewpoints, in the case of incorporating Cr into the wire, it is sufficient as long as the Cr amount in the wire is more than 0%, but the amount is preferably 0.01% or more, more preferably 0.05% or more, still more preferably 0.10% or more. In addition, the Cr amount in the wire is preferably 1.0% or less, more preferably 0.8% or less, still more preferably 0.6% or less.

(Mo: 0.35 mass% or less)

Mo is an element effective in ensuring the strength of the weld metal. However, if the amount of Mo is excessive, the strength may increase excessively, causing deterioration of the toughness.

From these viewpoints, in the case of incorporating Mo into the wire, it is sufficient as long as the Mo amount in the wire is more than 0%, but the amount is preferably 0.01% or more, more preferably 0.05% or more, still more preferably 0.10% or more. In addition, the Mo amount in the wire is preferably 0.35% or less, more preferably 0.30% or less, still more preferably 0.25% or less, yet still more preferably 0.20% or less.

(Nb: 0.030 mass% or less)

Nb is an element effective in ensuring the strength of the weld metal. However, if the amount of Nb is excessive, the strength may increase excessively, causing deterioration of the toughness.

From these viewpoints, in the case of incorporating Nb into the wire, it is sufficient as long as the Nb amount in the wire is more than 0%, but the amount is preferably 0.001% or more, more preferably 0.005% or more, still more preferably 0.008% or more. In addition, the Nb amount in the wire is preferably 0.030% or less, more preferably 0.020% or less, still more preferably 0.015% or less.

(V: 0.050 mass% or less)

V is an element effective in ensuring the strength of the weld metal. However, if the amount of V is excessive, the strength may increase excessively, causing deterioration of the toughness.

From these viewpoints, in the case of incorporating V into the wire, it is sufficient as long as the V amount in the wire is more than 0%, but the amount is preferably 0.001% or more, more preferably 0.005% or more, still more preferably 0.008% or more. In addition, the V amount in the wire is preferably 0.050% or less, more preferably 0.020% or less, still more preferably 0.015% or less.

(A total of Na and K: 1.0 mass% or less)

Na and K are elements having an effect of enhancing the arc stability and reducing spatter generation. However, if the amounts of these elements are excessive, the hygroscopicity resistance may deteriorate, causing a problem with low-temperature cracking resistance and porosity resistance.

From these viewpoints, in the case of incorporating one or more of Na and K into the wire, it is sufficient as long as the total amount of Na and K in the wire is more than 0%, but the total amount is preferably 0.005% or more, more preferably 0.010% or more, still more preferably 0.020% or more. In addition, the total amount of Na and K in the wire is preferably 1.0% or less, more preferably 0.50% or less, still more preferably 0.20% or less.

(Ca: 1.0 mass% or less)

Ca is an element which has the effect of improving the arc stability and reducing spatter generation. However, if the Ca amount is excessive, spatter generation rather increases.

From that standpoint, in the case where Ca is contained in the wire, the Ca amount in the wire may be more than 0%, and is preferably 0.005% or more, more preferably 0.050% or more, still more preferably 0.20% or more. The Ca amount in the wire is preferably 1.0% or less, more preferably 0.90% or less, still more preferably 0.70% or less.

(Mg: 1.0 mass% or less)

Mg is an element having an effect of enhancing the arc stability and reducing spatter. However, if the Mg amount is excessive, spatter generation rather increases.

From these viewpoints, in the case of incorporating Mg into the wire, it is sufficient as long as the Mg amount in the wire is more than 0%, but the amount is preferably 0.005% or more, more preferably 0.050% or more, still more preferably 0.20% or more. In addition, the Mg amount in the wire is preferably 1.0% or less, more preferably 0.90% or less, still more preferably 0.70% or less.

In the case where both Mg and Ca are contained, the total of Mg and Ca is preferably 1.0% or less, more preferably 0.90% or less, still more preferably 0.70% or less. The total of Mg and Ca is preferably 0.005% or more, more preferably 0.050% or more, still more preferably 0.20% or more.

(F: 1.0 mass% or less)

F may be incorporated into the wire so as to adjust the arc spraying force (concentration) and reduce the amount of hydrogen diffused in the deposited metal. However, if the amount of F becomes excessive, the fume emission and spatter generated may increase.

From these viewpoints, in the case of incorporating F into the wire, it is sufficient as long as the F amount in the wire is more than 0%, but the amount is preferably 0.010% or more, more preferably 0.025% or more, still more preferably 0.050% or more. In addition, the F amount in the wire is preferably 1.0% or less, more preferably 0.60% or less, still more preferably 0.40% or less.

($ZrO_2$: from 0.02 to 0.50 mass%)

$ZrO_2$ is a component having an effect of enhancing the bead smoothness. However, if the amount of $ZrO_2$ is excessive, a convex bead shape may be formed in a vertical position. On the other hand, if the amount of $ZrO_2$ is too small, the bead smoothness may deteriorate.

From these viewpoints, in the case of incorporating $ZrO_2$ into the wire, the $ZrO_2$ amount in the wire is preferably 0.02% or more, more preferably 0.05% or more. In addition, the $ZrO_2$ amount in the wire is preferably 0.50% or less, more preferably 0.45% or less.

($Al_2O_3$: from 0.02 to 0.80 mass%)

$Al_2O_3$ is a component having an effect of enhancing the bead smoothness. However, if the amount of $Al_2O_3$ is excessive, the bead wettability may deteriorate or spatter may be generated. On the other hand, if the amount of $Al_2O_3$ is too small, the bead smoothness may deteriorate.

From these viewpoints, in the case of incorporating $Al_2O_3$ into the wire, the $Al_2O_3$ amount in the wire is preferably 0.02% or more, more preferably 0.05% or more. In addition, the $Al_2O_3$ amount in the wire is preferably 0.80% or less, more preferably 0.60% or less.

The amount of Al metal is not regarded as the amount of $Al_2O_3$.

A preferred embodiment of the flux-cored wire for gas-shielded arc welding contains both of Ni: from 0.80 to 3.50 mass% and B: from 0.0008 to 0.012 mass%.

More specifically, the flux-cored wire for gas-shielded arc welding according to this one preferred embodiment is a flux-cored wire for gas-shielded arc welding, containing, based on the total mass of the wire:

C: from 0.03 to 0.12 mass%;

Si in terms of Si in Si alloy and Si compound: from 0.20 to 0.70 mass%;
Mn: from 1.0 to 4.0 mass%;
Ti in terms of Ti in Ti alloy and Ti compound: from 2.4 to 4.5 mass%;
Al: from 0.005 to 0.050 mass%;
Li in terms of Li in Li alloy and Li compound: from 0.01 to 0.10 mass%;
Ni: from 0.80 to 3.50 mass%;
B: from 0.0008 to 0.012 mass%;and
Fe: 80 mass% or more; and
satisfying Li/Si$\geq$0.05.

The flux-cored wire for gas-shielded arc welding according to this embodiment can give a weld metal in which the oxide-based inclusion have a cubic crystal structure, for the reason shown above. In addition, since this flux-cored wire contains both a specific amount of Ni and a specific amount of B, the formation of intergranular bainite, which is competitive with acicular ferrite, can be inhibited while inhibiting the formation of coarse intergranular ferrite, which adversely affects the toughness, and the formation of fine acicular ferrite (AF) structure that is formed from inclusions as a start point and is effective in improving the low-temperature toughness can be enhanced. Thus, the low-temperature toughness of the weld metal structure can be further improved throughout the whole cross-section.

The flux-cored wire of this embodiment is a wire obtained typically by filling a steel-made outer shell with a flux. More specifically, the flux-cored wire according to this embodiment is composed of a stainless steel- or soft steel-made outer shell taking on a tubular shape and a flux filling the interior (inner side) of the outer shell.

The flux-cored wire may be in either form of a seamless one having no seam on the outer shell or a seam one having a seam on the outer shell. Furthermore, in the flux-cored wire, the wire surface (outside of the outer shell) may or may not be subjected to plating, etc.

Then, one embodiment of the method for producing the flux-cored wire of this embodiment is described.

In the production of the flux-cored wire of this embodiment, first, the interior of a steel-made outer shell is filled with a flux. On this occasion, a soft steel or low alloy steel having good wire drawability is preferably used for the outer shell. In addition, the composition and filling rate of the flux can be appropriately adjusted depending on the composition, thickness, etc. of the outer shell such that the total wire composition falls in the above-described range.

The wire in which the interior of the outer shell is filled with a flux is then drawn using a pore die or a roller die to decrease in diameter, and a flux-cored wire having a predetermined outside diameter is thereby obtained.

The outside diameter of the flux-cored wire of this embodiment is not particularly limited but in view of productivity of the wire, is preferably from 1.0 to 2.0 mm, more preferably from 1.2 to 1.6 mm.

The flux filling rate may be set to any value as long as each component in the wire falls within the range of the present invention, but in view of wire drawability and workability (e.g., feedability) during welding, the flux filling rate is preferably from 10 to 25 mass%, more preferably from 13 to 16 mass%, based on the total mass of the wire. The flux filling rate is defined as the ratio of the mass of the flux filling the interior of the outer shell to the total mass of the wire (i.e., outer shell + flux).

<Weld Metal>

The weld metal (low-alloy-steel weld metal) according to this embodiment is a weld metal containing: C: from 0.04 to 0.12 mass%; Si: from 0.10 to 0.50 mass%; Mn: from 0.80 to 3.00 mass%; Ti: from 0.030 to 0.100 mass%; Al: from 0.002 to 0.010 mass%; O: from 0.030 to 0.070 mass%; N: more than 0 and 0.01 mass% or less; and at least one of Ni: from 0.30 to 3.50 mass% and B: from 0.0005 to 0.0070 mass%, with the remainder consisting of Fe and inevitable impurities,
wherein oxide-based inclusions having a minor diameter of 1 $\mu$m or more contained in the weld metal satisfy the following requirements (1) and (2):

(1) an average composition of the oxide-based inclusions having a minor diameter of 1 $\mu$m or more contained in the weld metal satisfies $Al_2O_3$+MnO+$TiO_2$$\geq$50% by mass%;
(2) the oxide-based inclusions having a minor diameter of 1 $\mu$m or more contained in the weld metal include a particle including an oxide phase having a cubic crystal structure.

The weld metal of this embodiment is, for example, a weld metal having excellent low-temperature toughness obtained by gas-shielded arc welding using the above-described flux-cored wire for gas-shielded arc welding.

The reason for numerical limitation on the amount of each of components contained in the weld metal of this embodiment is described below. The amount of each component in the weld metal is a content based on the total mass of the weld metal, i.e., a content based on the total mass of the weld metal.

(C: from 0.04 to 0.12 mass%)

The reason for numerical limitation on the C amount in the weld metal is the same as the reason for numerical limitation on the C amount in the wire above.

Accordingly, the C amount in the weld metal is 0.12% or less, preferably 0.10% or less, more preferably 0.08% or less. In addition, the C amount in the weld metal is 0.04% or more, preferably 0.05% or more, more preferably 0.06% or more.

(Si: from 0.10 to 0.50 mass%)

The reason for numerical limitation on the Si amount in the weld metal is the same as the reason for numerical limitation on the C amount in the wire above.

Accordingly, the Si amount in the weld metal is 0.50% or less, preferably 0.40% or less, more preferably 0.35% or less, still more preferably 0.30% or less. In addition, the Si amount in the weld metal is 0.10% or more, preferably 0.15% or more, more preferably 0.20% or more.

(Mn: from 0.80 to 3.00 mass%)

The reason for numerical limitation on the Mn amount in the weld metal is the same as the reason for numerical limitation on the Mn amount in the wire above.

Accordingly, the Mn amount in the weld metal is 3.00% or less, preferably 2.50% or less, more preferably 1.90% or less. In addition, the Mn amount in the weld metal is 0.80% or more, preferably 1.20% or more, more preferably 1.50% or more.

(Ti: from 0.030 to 0.100 mass%)

The reason for numerical limitation on the Ti amount in the weld metal is the same as the reason for numerical limitation on the Ti amount in the wire above.

Accordingly, the Ti amount in the weld metal is 0.100% or less, preferably 0.080% or less, more preferably 0.070% or less. In addition, the Ti amount in the weld metal is 0.030% or more, preferably 0.040% or more, more preferably 0.050% or more.

(Al: from 0.002 to 0.010 mass%)

The reason for numerical limitation on the Al amount in the weld metal is the same as the reason for numerical limitation on the Al amount in the wire above.

Accordingly, the Al amount in the weld metal is 0.010% or less, preferably 0.008% or less, more preferably 0.006% or less. In addition, the Al amount in the weld metal is 0.002% or more, preferably 0.003% or more, more preferably 0.004% or more.

(O: from 0.030 to 0.070 mass%)

O is an element contributing to the formation of slag ensuring the welding workability. If the O amount is excessive, an oxide-based inclusion may increase, causing deterioration of the toughness. On the other hand, if the O amount is too small, the welding workability may seriously deteriorate.

From these viewpoints, the O amount in the weld metal is 0.070% or less, preferably 0.060% or less, more preferably 0.055% or less. In addition, the O amount in the weld metal is 0.030% or more, preferably 0.035% or more, more preferably 0.040% or more.

(N: more than 0 and 0.01 mass% or less)

If N is incorporated in an excessive amount, the strength may increase excessively, causing deterioration of the toughness, but it is industrially difficult to reduce the N amount to 0%.

Accordingly, the N amount in the weld metal is controlled to be more than 0 and 0.01% or less. The N amount is preferably 0.007% or less, more preferably 0.006% or less.

(At least one of Ni: from 0.30 to 3.50 mass% and B: from 0.0005 to 0.0070 mass%)

The reason for numerical limitation on the Ni amount in the weld metal is the same as the reason for numerical limitation on the Ni amount in the wire above.

In addition, the reason for numerical limitation on the B amount in the weld metal is the same as the reason for numerical limitation on the B amount in the wire above.

The weld metal of this embodiment contains at least one of Ni and B in a specific amount range.

In the case of incorporating Ni into the weld metal, the Ni amount in the weld metal is 3.50% or less, preferably 3.00% or less, more preferably 2.70% or less. In addition, the Ni amount in the wire is 0.30% or more, preferably 1.00% or more, more preferably 2.00% or more.

In the case of incorporating B into the weld metal, the B amount in the weld metal is 0.0070% or less, preferably 0.0050% or less, more preferably 0.0030% or less. In addition, the B amount in the wire is 0.0005% or more, preferably 0.0010% or more, more preferably 0.0015% or more.

(Fe and Inevitable impurities)

The remainder of the weld metal of this embodiment consists of Fe and inevitable impurities.

The Fe amount of the remainder is, for example, 90 mass% or more, preferably 90.5 mass% or more, more preferably 91 mass% or more.

The upper limit of the Fe amount is not particularly limited but the amount of Fe is, for example, 98.7 mass% or less in relation to other component composition.

The inevitable impurities of the remainder may be impurities in which a component (e.g., P, S, Sn, Pb, Sb) other than the above-described components, or the later-described components (e.g., Nb, V, Cu) that may be selectively contained are inevitably contained, and these components are allowed to be contained as long as the effects of the present invention are not inhibited.

In the weld metal according to this embodiment, the oxide-based inclusions having a minor diameter of 1 $\mu$m or more contained in the weld metal satisfy the following requirements (1) and (2):

(1) an average composition of the oxide-based inclusions having a minor diameter of 1 $\mu$m or more contained in the weld metal satisfies $Al_2O_3+MnO+TiO_2 \geq 50\%$ by mass%;
(2) the oxide-based inclusions having a minor diameter of 1 $\mu$m or more contained in the weld metal include a particle including an oxide phase having a cubic crystal

structure.

(Requirement (1))

In the weld metal according to this embodiment, an average composition of the oxide-based inclusions having a minor diameter of 1 $\mu$m or more contained in the weld metal satisfies $Al_2O_3+MnO+TiO_2 \geq 50\%$ by mass%.

The $Al_2O_3+MnO+TiO_2$ is a parameter which indicates the composition of the oxide-based inclusion. In case where the value thereof is less than 50%, the amount of the fine acicular ferrite structure formed from inclusions as a start point may be reduced, resulting in a decrease in low-temperature toughness.

Accordingly, in the weld metal according to this embodiment, the average composition of the oxide-based inclusion is controlled so as to satisfy, by mass%, that $Al_2O_3+MnO+TiO_2$ is 50% or more, preferably 55% or more, more preferably 65% or more.

The average composition of oxide-based inclusions having a minor diameter of 1 $\mu$m or more contained in the weld metal can be measured by the Electron Probe X-ray Micro Analyzer (EPMA) method. In addition, the oxide-based inclusion contains $TiO_2$, MnO, $Al_2O_3$, and $SiO_2$, and the components of the remainder are inevitable oxides and inevitable fluorides. The inevitable oxide is an oxide unavoidably contained during welding, etc. and examples thereof include, for example, $ZrO_2$, $Cr_2O_3$, $Li_2O$, $Na_2O$, MgO, CaO, FeO, $Fe_3O_4$, and $Fe_2O_3$. Examples of the inevitable fluorides include $CaF_2$. The inevitable oxide or the inevitable fluoride may be contained as long as it does not adversely affect the properties described above and desired properties are obtained. The total mass percentage of inevitable oxides and inevitable fluorides based on the total mass of the oxide-based inclusion is, typically, preferably less than 30%, more preferably 20% or less. In addition, each of $ZrO_2$, $Cr_2O_3$, $Li_2O$, $Na_2O$, CaO, MgO, FeO, $Fe_3O_4$, $Fe_2O_3$ and $CaF_2$ may be contained at a mass percentage of less than 10% based on the total mass of the oxide-based inclusion.

(Requirement (2))

In the weld metal according to this embodiment, it is necessary that the oxide-based inclusions having a minor diameter of 1 μm or more contained in the weld metal include a particle including an oxide phase having a cubic crystal structure. In case where the oxide-based inclusions having a minor diameter of 1 μm or more contained in the weld metal include no particle including an oxide phase having a cubic crystal structure, the toughness decreases.

The expression "the oxide-based inclusions having a minor diameter of 1 μm or more contained in the weld metal include a particle including an oxide phase having a cubic crystal structure" means that the proportion of the number of oxide-based inclusion particles containing therein an oxide phase having a cubic crystal structure to the number of the particles of the oxide-based inclusions having a minor diameter of 1 μm or more contained in the weld metal is any value exceeding 0%. The proportion thereof is preferably 10% or more, more preferably 30% or more. There is no particular upper limit on the proportion thereof, and the proportion thereof may be 100%. More specifically, all the particles of oxide-based inclusions having a minor diameter of 1 μm or larger contained in the weld metal may contain therein an oxide phase having a cubic crystal structure. A method for calculating the proportion in number will be described in Examples later.

In order for oxide-based inclusions having a minor diameter of 1 μm or more contained in the weld metal to satisfy the requirements (1) and (2), the composition of the wire used, the composition of the base metal, various welding conditions, etc. are appropriately adjusted.

In addition to each of the components described above, the weld metal of this embodiment may further contain at least one of the following components in a predetermined amount.

(Cu: 0.40 mass% or less)

The reason for numerical limitation on the Cu amount in the weld metal is the same as the reason for numerical limitation on the Cu amount in the wire above.

Accordingly, in the case of incorporating Cu into the weld metal, it is sufficient as long as the Cu amount in the weld metal is more than 0%, but the amount is preferably 0.01% or more, more preferably 0.05% or more, still more preferably 0.10% or more. In addition, the Cu amount in the weld metal is preferably 0.40% or less, more preferably 0.30% or less, still more preferably 0.25% or less.

(Cr: 1.0 mass% or less)

The reason for numerical limitation on the Cr amount in the weld metal is the same as the reason for numerical limitation on the Cr amount in the wire above.

Accordingly, in the case of incorporating Cr into the weld metal, it is sufficient as long as the Cr amount in the weld metal is more than 0%, but the amount is preferably 0.01% or more, more preferably 0.05% or more, still more preferably 0.10% or more. In addition, the Cr amount in the weld metal is preferably 1.0% or less, more preferably 0.8% or less, still more preferably 0.6% or less.

(Mo: 0.35 mass% or less)

The reason for numerical limitation on the Mo amount in the weld metal is the same as the reason for numerical limitation on the Mo amount in the wire above.

Accordingly, in the case of incorporating Mo into the weld metal, it is sufficient as long as the Mo amount in the weld metal is more than 0%, but the amount is preferably 0.01% or more, more preferably 0.05% or more, still more preferably 0.10% or more. In addition, the Mo amount in the weld metal is preferably 0.35% or less, more preferably 0.30% or less, still more preferably 0.25% or less, yet still more preferably 0.20% or less.

(Nb: 0.020 mass% or less)

The reason for numerical limitation on the Nb amount in the weld metal is the same as the reason for numerical limitation on the Nb amount in the wire above.

Accordingly, in the case of incorporating Nb into the weld metal, it is sufficient as long as the Nb amount in the weld metal is more than 0%, but the amount is preferably 0.001% or more, more preferably 0.005% or more, still more preferably 0.008% or more. In addition, the Nb amount in the weld metal is preferably 0.020% or less, more preferably 0.015% or less, still more preferably 0.012% or less.

(V: 0.050 mass% or less)

The reason for numerical limitation on the V amount in the weld metal is the same as the reason for numerical limitation on the V amount in the wire above.

Accordingly, in the case of incorporating V into the weld metal, it is sufficient as long as the V amount in the weld metal is more than 0%, but the amount is preferably 0.001% or more, more preferably 0.005% or more, still more preferably 0.008% or more. In addition, the V amount in the weld metal is preferably 0.050% or less, more preferably 0.020% or less, still more preferably 0.015% or less.

A preferred embodiment of the weld metal is a weld metal containing both of Ni: from 0.80 to 3.50 mass% and B: from 0.0005 to 0.0070 mass%,
wherein a rate of acicular ferrite formation defined by the following formula is 15% or more:

$$\text{Rate of acicular ferrite formation (\%)} = (\text{number of inclusions acting as a start}$$
$$\text{point of acicular ferrite})/(\text{number of all inclusions}) \times 100$$

Specifically, the weld metal according to this preferred embodiment is a weld metal, containing:

C: from 0.04 to 0.12 mass%;
Si: from 0.10 to 0.50 mass%;
Mn: from 0.80 to 3.00 mass%;
Ti: from 0.030 to 0.100 mass%;
Al: from 0.002 to 0.010 mass%;
O: from 0.030 to 0.070 mass%;
N: more than 0 and 0.01 mass% or less;
Ni: from 0.80 to 3.50 mass%; and
B: from 0.0005 to 0.0070 mass%,
with the remainder consisting of Fe and inevitable impurities,
wherein oxide-based inclusions having a minor diameter of 1 $\mu$m or more contained in the weld metal satisfy the following requirements (1) and (2):

(1) an average composition of the oxide-based inclusions having a minor diameter of 1 $\mu$m or more contained in the weld metal satisfies $Al_2O_3+MnO+TiO_2 \geq 50\%$ by mass%;
(2) the oxide-based inclusions having a minor diameter of 1 $\mu$m or more contained in the weld metal include a particle including an oxide phase having a cubic crystal structure, and

wherein a rate of acicular ferrite formation defined by the following equation of 15% or more:

$$\text{Rate of acicular ferrite formation (\%)} = (\text{number of inclusions acting as a start}$$
$$\text{point of acicular ferrite})/(\text{number of all inclusions}) \times 100$$

In the weld metal according to this embodiment, the oxide-based inclusion have a cubic crystal structure, for the reason shown above. In addition, since this weld metal contains both a specific amount of Ni and a specific amount of B, the formation of intergranular bainite, which is competitive with acicular ferrite, was inhibited while inhibiting the formation of coarse intergranular ferrite, which adversely affects the toughness, and the formation of fine acicular ferrite (AF) structure formed from inclusions as a start point and effective in improving the low-temperature toughness is enhanced. Thus, this low-temperature toughness can be further improved.

Here, the rate of acicular ferrite (AF) formation (%) is a parameter indicative of a capability of forming fine acicular ferrite (AF) contributing to the improvement of low-temperature toughness and is defined by (number of inclusions acting as a start point of acicular ferrite/number of all inclusions)$\times$100.

From these viewpoints, the rate of acicular ferrite formation in the weld metal of this embodiment is 15% or more, preferably 18% or more, more preferably 20% or more.

In this embodiment, it is preferable that both the as-solidified structure portion and the reheated coarse-grain region have a rate of acicular ferrite formation of 15% or more.

The rate of acicular ferrite formation can be measured as follows.

First, the weld metal is cut at a surface perpendicular to the welding direction and etched with nital (nitric acid:ethanol=5:95). Subsequently, a range of 165 $\mu$m$\times$219 $\mu$m of the unmodified portion of the final pass is photographed by an optical microscope at a magnification of 400 in four visual fields and out of inclusion particles on the photograph, those having an equivalent-circle diameter of 1.5 $\mu$m or more are selected. Then, a structure extending radially from an inclusion particle is defined as acicular ferrite, and the rate of acicular ferrite formation (%) is measured based on the following formula:

$$\text{Rate of acicular ferrite formation (\%)} = (\text{number of inclusions acting as a start}$$
$$\text{point of acicular ferrite/number of all inclusions}) \times 100$$

Furthermore, in the deposited metal of this embodiment, the tensile strength in a tensile test in conformity with JIS Z2202 is preferably in excess of 490 MPa, more preferably in excess of 690 MPa, still more preferably in excess of 780 MPa.

[Second Embodiment]

<Flux-cored Wire for Gas-shielded Arc Welding>

The flux-cored wire for gas-shielded arc welding (hereinafter referred to also as "flux-cored wire" or "wire") according to this embodiment contains, based on total mass of the wire: C: from 0.03 to 0.12 mass%; Si in terms of Si in Si alloy and Si compound: from 0.20 to 0.36 mass%; Mn: from 2.5 to 3.3 mass%; Ti in terms of Ti in Ti alloy and Ti compound: from 2.4 to 4.0 mass%; Ni: from 1.00 to 3.50 mass%; B: more than 0 and 0.012 mass% or less; Ca: from 0.03 to 1.0 mass%; Li in terms of Li in Li alloy and Li compound from 0.01 to 0.10 mass%, and Fe: 80 mass% or more.
The reason for numerical limitation on the amount of each of components contained in the flux-cored wire for gas-shielded arc welding of this embodiment is described below. In the following, the amount of each component in the flux-cored wire for gas-shielded arc welding is a content based on the total mass of the flux-cored wire for gas-shielded arc welding, i.e., a content based on the total mass of the wire.

(C: from 0.03 to 0.12 mass%)

C is an element effective in enhancing the strength of the weld metal. However, in case where the C amount is excessive, the strength might be excessively high and hence toughness may deteriorate. On the other hand, in case where the C amount is too small, not only the weld metal may have insufficient strength but also coarse intergranular ferrite, which adversely affects the toughness, is formed.
From those standpoints, the C amount in the wire is 0.12% or less, preferably 0.09% or less, more preferably 0.08% or less. The C amount in the wire is 0.03% or more, preferably 0.04% or more, more preferably 0.05% or more.

(Si in terms of Si in Si alloy and Si compound: from 0.20 to 0.36 mass%)

Si is an element which improves welding workability. However, in case where the Si amount is excessive, the welding results in inclusions which have a Young's modulus considerably different from that of the matrix, rendering brittle fracture prone to occur from the inclusions. Meanwhile, in case where the Si amount is too small, there is the possibility of resulting in a decrease in welding workability or toughness.
From those standpoints, the Si amount in the wire, in terms of Si in Si alloy and Si compound, is 0.36% or less, preferably 0.34% or less, more preferably 0.32% or less. Meanwhile, the amount of Si in the wire, in terms of Si in Si alloy and Si compound, is 0.20% or more, preferably 0.22% or more, more preferably 0.24% or more.
Examples of Si sources include $SiO_2$, $K_2SiF_6$, potassium glass, and soda glass.

(Mn: from 2.5 to 3.3 mass%)

Mn is an element effective in improving the strength. However, in case where the Mn amount is excessive, there is a possibility that the weld metal might have excessively high strength and hence the toughness may deteriorate. On the other hand, in case where the Mn amount is too small, coarse intergranular ferrite, which adversely affects the toughness, is formed.
From those standpoints, the Mn amount in the wire is 3.3% or less, preferably 3.2% or less, more preferably 3.1% or less. The Mn amount in the wire is 2.5% or more, preferably 2.6% or more, more preferably 2.7% or more.

(Ti in terms of Ti in Ti alloy and Ti compound: from 2.4 to 4.0 mass%)

Ti is an element constituting an inclusion. However, if the amount of Ti is excessive, the strength may increase excessively, causing deterioration of the toughness. On the other hand, if the amount of Ti is too small, acicular ferrite formation starting from an inclusion may decrease, making it impossible to ensure the low-temperature toughness.

From these viewpoints, the Ti amount in the wire is, in terms of Ti in Ti alloy and Ti compound, 4.0% or less, preferably 3.8% or less, more preferably 3.5% or less. In addition, the Ti amount in the wire is, in terms of Ti in Ti alloy and Ti compound, 2.4% or more, preferably 2.5% or more, more preferably 2.6% or more.

Here, examples of the Ti source include $TiO_2$, etc.

(Ni: from 1.00 to 3.50 mass%)

Ni is an element necessary for inhibiting brittle fracture. Ni further has the function of retarding the formation of an intergranular bainite structure, which is competitive with acicular ferrite (AF), thereby promoting the formation of AF. However, in case where the Ni amount is excessive, the amount of martensite formed is increased and this may increase the strength and hence result in a decrease in Charpy impact absorption energy. Meanwhile, in case where the Ni amount is too small, there is the possibility of resulting in a decrease in toughness.

From those standpoints, the Ni amount in the wire is 3.50% or less, preferably 3.00% or less, more preferably 2.70% or less. The Ni amount in the wire is 1.00% or more, preferably 1.20% or more, more preferably 2.00% or more.

(B: 0.012 mass% or less (excluding 0 mass%))

B is an element that inhibits the formation of intergranular ferrite, which adversely affects the toughness, and that thereby contributes to a decrease in low-temperature brittle fracture rate. However, in case where the amount of B is excessive, there is the possibility of high-temperature cracking.

From those standpoints, the B amount in the wire is 0.012% or less, preferably 0.010% or less, more preferably 0.007% or less. The B amount in the wire may be more than 0%, and is preferably 0.0008% or more, more preferably 0.0010% or more.

(Ca: from 0.03 to 1.0 mass%)

Ca is a strong deoxidizing element and contributes to improvement of the toughness by reducing Si during welding and consequently reducing the glass phase inclusion (Si-based) having a low Young's modulus compared with the matrix. However, if the amount is excessive, the amount of acicular ferrite formed may be reduced and the toughness deteriorates. On the other hand, if the amount of Ca is too small, the glass phase inclusion in the weld metal may increase, leading to a reduction in the toughness.

From these viewpoints, the Ca amount in the wire is 0.03% or more, preferably 0.04% or more, more preferably 0.05% or more. In addition, the Ca amount in the wire is preferably 1.0% or less, more preferably 0.5% or less, still more preferably 0.3% or less.

(Li in terms of Li in Li alloy and Li compound: from 0.01 to 0.10 mass%)

Li is an element which has the function of forming the so-called Mn-depleted layer, which has a low Mn concentration, in the base metal located on the periphery of oxide-based inclusion in the weld metal and thereby promoting the formation of acicular ferrite. However, in case where the Li amount is excessive, the hygroscopicity resistance of the wire deteriorates, leading to problems concerning cold cracking resistance and porosity resistance. Meanwhile, in case where the Li amount is too small, the Mn-depleted layer is not sufficiently formed and this may result in a decrease in toughness.

From those standpoints, the Li amount in the wire, in terms of Li in Li alloy and Li compound, is 0.10% or less, preferably 0.08% or less, more preferably 0.06% or less. Meanwhile, the Li amount in the wire, in terms of Li in Li alloy and Li compound, is 0.01% or more, preferably 0.02% or more, more preferably 0.03% or more.

(Fe and inevitable impurities)

The remainder of the flux-cored wire of this embodiment consists of Fe and inevitable impurities. Furthermore, in the flux-cored wire of this embodiment, an alloy element other than the above-described elements, a slag forming agent, an arc stabilizer, etc. may be added in addition to respective components described above, as long as the effects of the present invention are not inhibited. Details for the remainder are the same as in the first embodiment.

Furthermore, in addition to respective components described above, the flux-cored wire of this embodiment may further contain at least one of the following components in a predetermined amount.

(Al: from 0.005 to 0.050 mass%)

Al is an element functioning as a deoxidizer. However, in case where the Al amount is excessive, there is a possibility that the formation of acicular ferrite from inclusions as a start point might be insufficient, making it impossible to ensure low-temperature toughness. Meanwhile, in case where the Al amount is too small, there is a possibility that deoxidation might be insufficient, resulting in generation of blowholes.

From those standpoints, the Al amount in the wire, in the case of incorporating Al, is 0.050% or less, preferably 0.045% or less, more preferably 0.042% or less. The Al amount in the wire, in the case of incorporating Al, is 0.005% or more, preferably 0.008% or more, more preferably 0.010% or more.

(Cu: 0.40 mass% or less)

Cu may be incorporated into the wire in an amount of up to 0.40% or less. The reason for adding Cu and the preferable range thereof are the same as in the first embodiment.

(Cr: 1.0 mass% or less)

Cr may be incorporated into the wire in an amount of up to 1.0% or less. The reason for adding Cr and the preferable range thereof are the same as in the first embodiment.

(Nb: 0.030 mass% or less)

Nb may be incorporated into the wire in an amount of up to 0.030% or less. The reason for adding Nb and the preferable range thereof are the same as in the first embodiment.

(V: 0.050 mass% or less)

V may be incorporated into the wire in an amount of up to 0.050% or less. The reason for adding V and the preferable range thereof are the same as in the first embodiment.

(A total of Na and K: 1.0 mass% or less)

Na and K may be incorporated in a total amount of 1.0% or less. The reason for adding Na and K and the preferable range thereof are the same as in the first embodiment.

(Mg: 1.0 mass% or less)

Mg may be incorporated into the wire in an amount of up to 1.0% or less. The reason for adding Mg and the preferable range thereof are the same as in the first embodiment.

(F: 1.0 mass% or less)

F may be incorporated into the wire in an amount of up to 1.0% or less. The reason for adding F and the preferable range thereof are the same as in the first embodiment.

($ZrO_2$: from 0.02 to 0.50 mass%)

$ZrO_2$ may be incorporated into the wire in an amount of 0.02 to 0.50%. The reason for adding $ZrO_2$ and the preferable range thereof are the same as in the first embodiment.

($Al_2O_3$: from 0.02 to 0.80 mass%)

$Al_2O_3$ may be incorporated into the wire in an amount of 0.02 to 0.80%. The reason for adding $Al_2O_3$ and the preferable range thereof are the same as in the first embodiment.

As for the production method, outside diameter, flux filling rate, etc. of the flux-cored wire of this embodiment, those applied to the first embodiment are appropriately employed.

<Weld Metal>

The weld metal (low-alloy-steel weld metal) according to this embodiment is a weld metal, containing: C: from 0.04 to 0.12 mass%; Si: from 0.20 to 0.32 mass%; Mn: from 1.80 to 2.30 mass%; Ti: from 0.030 to 0.090 mass%: Ni: from 1.00 to 3.50 mass%; B: more than 0 and 0.0070 mass% or less; Ca: from 0.0003 to 0.010 mass%; N: more than 0 and 0.01 mass% or less; and O: from 0.030 to 0.070 mass%, with the remainder including Fe and inevitable impurities, wherein a rate of acicular ferrite formation defined by the following formula is 15% or more:

$$\text{Rate of acicular ferrite formation (\%)} = (\text{number of inclusions acting as a start}$$

$$\text{point of acicular ferrite})/(\text{number of all inclusions}) \times 100$$

The weld metal of this embodiment is a weld metal having both good low-temperature toughness and high strength obtained, for example, by gas-shielded arc welding using the above-described flux-cored wire for gas-shielded arc welding.
The reason for numerical limitation on the amount of each of components contained in the weld metal of this embodiment is described below. The amount of each component in the weld metal is a content based on the total mass of the weld metal, i.e., a content based on the total mass of the weld metal.

(C: from 0.04 to 0.12 mass%)

The reason for numerical limitation on the C amount in the weld metal is the same as the reason for numerical limitation on the C amount in the wire above.
Accordingly, the C amount in the weld metal is 0.12% or less, preferably 0.10% or less, more preferably 0.08% or less. In addition, the C amount in the weld metal is 0.04% or more, preferably 0.05% or more, more preferably 0.06% or more.

(Si: from 0.20 to 0.32 mass%)

The reason for numerical limitation on the Si amount in the weld metal is the same as the reason for numerical limitation on the C amount in the wire above.
Accordingly, the Si amount in the weld metal is 0.32% or less, preferably 0.30% or less, more preferably 0.28% or less. In addition, the Si amount in the weld metal is 0.20% or more, preferably 0.22% or more, more preferably 0.23% or more.

(Mn: from 1.80 to 2.30 mass%)

The reason for numerical limitation on the Mn amount in the weld metal is the same as the reason for numerical limitation on the Mn amount in the wire above.
Accordingly, the Mn amount in the weld metal is 2.30% or less, preferably 2.25% or less, more preferably 2.20% or less. In addition, the Mn amount in the weld metal is 1.80% or more, preferably 1.85% or more, more preferably 1.90% or more.

(Ti: from 0.030 to 0.090 mass%)

The reason for numerical limitation on the Ti amount in the weld metal is the same as the reason for numerical limitation on the Ti amount in the wire above.
Accordingly, the Ti amount in the weld metal is 0.090% or less, preferably 0.080% or less, more preferably 0.070% or less. In addition, the Ti amount in the weld metal is 0.030% or more, preferably 0.040% or more, more preferably 0.060% or more.

(Ca: from 0.0003 to 0.01 mass%)

The reason for numerical limitation on the Ca amount in the weld metal is the same as the reason for numerical limitation on the Ca amount in the wire above.
Accordingly, the Ca amount in the weld metal is 0.01% or less, preferably 0.005% or less, more preferably 0.003% or less. In addition, the Ca amount in the weld metal is 0.0003% or more, preferably 0.0004% or more, more preferably 0.0005% or more.

(Ni: from 1.00 to 3.50 mass%)

The reason for numerical limitation on the Ni amount in the weld metal is the same as the reason for numerical limitation on the Ni amount in the wire above.

Accordingly, the Ni amount in the weld metal is 3.50% or less, preferably 3.00% or less, more preferably 2.70% or less. In addition, the Ni amount in the wire is 1.00% or more, preferably 1.20% or more, more preferably 2.00% or more.

(B: 0.0070 mass% or less (excluding 0 mass%))

The reason for numerical limitation on the B amount in the weld metal is the same as the reason for numerical limitation on the B amount in the wire above.

Accordingly, the B amount in the weld metal is preferably 0.0070% or less, more preferably 0.0050% or less, still more preferably 0.0010% or less. In addition, it is sufficient as long as the B amount in the wire is more than 0%, but the amount is preferably 0.0005% or more, more preferably 0.0008% or more.

(N: more than 0 and 0.01 mass% or less)

N, when contained in too large an amount, may excessively heighten the strength to deteriorate the toughness. It is, however, difficult to industrially reduce the amount of N to 0%.

Accordingly, the N amount in the weld metal is regulated so as to be more than 0% and 0.01% or less. The N amount is preferably 0.007% or less, more preferably 0.006% or less.

(O: from 0.030 to 0.070 mass%)

O is an element which constitutes inclusions. If the O amount is insufficient, the number of inclusions acting as a start point of acicular ferrite may decrease, causing deterioration of the low-temperature toughness. Meanwhile, if the O amount is excessive, a coarse inclusion may increase, leading to a reduction in the impact absorption energy at low temperatures.

From those standpoints, the O amount in the weld metal is 0.070% or less, preferably 0.060% or less, more preferably 0.055% or less. The O amount in the weld metal is 0.030% or more, preferably 0.035% or more, more preferably 0.040% or more.

(Fe and inevitable impurities)

The remainder of the weld metal of this embodiment consists of Fe and inevitable impurities. Details for Fe and inevitable impurities of the remainder are the same as in the first embodiment.

In the weld metal of this embodiment, the rate of acicular ferrite formation is 15% or more.

Here, the rate of acicular ferrite (AF) formation (%) is a parameter indicative of a capability of forming fine acicular ferrite (AF) contributing to the improvement of low-temperature toughness and is defined as (number of inclusions acting as a start point of acicular ferrite/number of all inclusions)×100. If the rate of acicular ferrite formation is less than 15%, a fine acicular ferrite structure formed starting from an inclusion may decrease, causing deterioration of the low-temperature toughness.

From these viewpoints, the rate of acicular ferrite formation in the weld metal of this embodiment is 15% or more, preferably 18% or more, more preferably 20% or more.

In addition to each of the components described above, the weld metal of this embodiment may further contain at least one of the following components in a predetermined amount.

(Al: from 0.002 to 0.010 mass%)

The reason for numerical limitation on the Al amount in the weld metal is the same as the reason for numerical limitation on the Al amount in the wire above.

Accordingly, the Al amount in the weld metal is preferably 0.010% or less, more preferably 0.008% or less, still more preferably 0.006% or less. In addition, the Al amount in the wire is more than 0%, preferably 0.002% or more, more preferably 0.003% or more, still more preferably 0.004% or more.

(Cu: 0.40 mass% or less)

The reason for numerical limitation on the Cu amount in the weld metal is the same as the reason for numerical limitation on the Cu amount in the wire above.

Accordingly, in the case of incorporating Cu into the weld metal, it is sufficient as long as the Cu amount in the weld metal is more than 0%, but the amount is preferably 0.05% or more, more preferably 0.10% or more. In addition, the Cu amount in the weld metal is preferably 0.40% or less, more preferably 0.30% or less, still more preferably 0.25% or less.

(Cr: 1.0 mass% or less)

The reason for numerical limitation on the Cr amount in the weld metal is the same as the reason for numerical limitation on the Cr amount in the wire above.

Accordingly, in the case of incorporating Cr into the weld metal, it is sufficient as long as the Cr amount in the weld metal is more than 0%, but the amount is preferably 0.05% or more, more preferably 0.10% or more. In addition, the Cr amount in the weld metal is preferably 1.0% or less, more preferably 0.8% or less, still more preferably 0.6% or less.

(Mo: 0.35 mass% or less)

The reason for numerical limitation on the Mo amount in the weld metal is the same as the reason for numerical limitation on the Mo amount in the wire above.

Accordingly, in the case of incorporating Mo into the weld metal, it is sufficient as long as the Mo amount in the weld metal is more than 0%, but the amount is preferably 0.01% or more, more preferably 0.05% or more, still more preferably 0.10% or more. In addition, the Mo amount in the weld metal is preferably 0.35% or less, more preferably 0.30% or less, still more preferably 0.25% or less, further preferably 0.20% or less.

(Nb: 0.020 mass% or less)

The reason for numerical limitation on the Nb amount in the weld metal is the same as the reason for numerical limitation on the Nb amount in the wire above.

Accordingly, in the case of incorporating Nb into the weld metal, it is sufficient as long as the Nb amount in the weld metal is more than 0%, but the amount is preferably 0.005% or more, more preferably 0.008% or more. In addition, the Nb amount in the weld metal is preferably 0.020% or less, more preferably 0.015% or less, still more preferably 0.012% or less.

(V: 0.050 mass% or less)

The reason for numerical limitation on the V amount in the weld metal is the same as the reason for numerical limitation on the V amount in the wire above.

Accordingly, in the case of incorporating V into the weld metal, it is sufficient as long as the V amount in the weld metal is more than 0%, but the amount is preferably 0.005% or more, more preferably 0.008% or more. In addition, the V amount in the weld metal is preferably 0.050% or less, more preferably 0.020% or less, still more preferably 0.015% or less.

<Welding Conditions>

Preferable welding conditions when gas-shielded arc welding is performed using the above-described flux-cored wire for gas-shielded arc welding are described below.

(Heat Input)

The heat input is not particularly limited but is preferably 2.5 kJ/mm or less. If the heat input exceeds 2.5 kJ/mm, the cooling rate during welding decreases, and this causes a tendency that a coarse structure is readily formed and the toughness is reduced.

(Shielding Gas)

The shielding gas is not particularly limited, but a mixed gas containing 20 vol% or less of $CO_2$, with the remainder

being Ar, is preferably used. If the $CO_2$ amount exceeds 20 vol%, there is a tendency that a coarse oxide is readily formed and the roughness is reduced.

(Preheating-Interpass Temperature)

The preheating-interpass temperature is not particularly limited but is preferably from 50 to 200°C. If the temperature falls below 50°C, cracking during welding tends to readily occur. In addition, if it exceeds 200°C, the cooling rate during welding decreases, and a coarse structure tends to be readily formed and the toughness tends to be reduced.
The base metal is not particularly limited as long as the effects of the present invention are obtained, and the base metal may be appropriately selected in consideration of the composition of the flux-cored wire for gas-shielded arc welding, the welding conditions, etc.

EXAMPLES

The effects of the present invention are specifically described below by referring to Examples and Comparative Examples, but the present invention is not limited thereto.
In the following, Examples 1 to 6, 8 to 13, and 15 to 56 are Examples for describing the technical effects of the first embodiment.

(Examples 1 to 6, 8 to 13, and 15 to 31)

Flux-cored wires of Examples 1 to 31 having the chemical compositions shown in Table 1 below were produced, under the conditions of a wire diameter of 1.2 mm and a flux filling rate of 13.5%. The remainder of each flux-cored wire was iron and inevitable impurities. In Table 1, "Amount in terms of Si" means the amount in terms of Si in an Si alloy and an Si compound, "Amount in terms of Ti" means the amount in terms of Ti in a Ti alloy and a Ti compound, and "Amount in terms of Li" means the amount in terms of Li in an Li alloy and an Li compound.

Table 1

| No. | Composition of Wire (mass%) | | | | | | | | | | | | | | | | | | Li/Si |
|---|---|---|---|---|---|---|---|---|---|---|---|---|---|---|---|---|---|---|---|
| | C | Amount in terms of Si | Mn | Amount in terms of Ti | Al | Amount in terms of Li | Ni | Mo | B | Cu | Cr | Nb | V | Na+K | Mg+Ca | F | ZrO$_2$ | Al$_2$O$_3$ | |
| 1 | 0.14 | 0.31 | 2.6 | 3.0 | 0.025 | 0.037 | 2.0 | 0.15 | | | | | | 0.04 | 0.44 | 0.21 | 0.55 | 0.12 | 0.12 |
| 2 | 0.08 | 0.78 | 2.6 | 3.2 | 0.036 | 0.030 | 2.1 | 0.14 | | | | | | 0.07 | 0.50 | 0.16 | 0.10 | 0.32 | 0.04 |
| 3 | 0.05 | 0.61 | 2.7 | 3.2 | 0.035 | 0.035 | | 0.16 | 0.0044 | | | | | 0.05 | 0.48 | 0.14 | 0.27 | 0.55 | 0.06 |
| 4 | 0.07 | 0.51 | 2.6 | 3.1 | 0.022 | 0.043 | | 0.10 | 0.0032 | | | | | 0.06 | 0.53 | 0.09 | 0.27 | 0.25 | 0.08 |
| 5 | 0.07 | 0.32 | 2.6 | 3.2 | 0.037 | 0.032 | 2.2 | 0.12 | | | | | | 0.04 | 0.44 | 0.12 | 0.12 | 0.20 | 0.10 |
| 6 | 0.06 | 0.27 | 2.6 | 2.8 | 0.023 | 0.059 | | 0.11 | 0.0049 | | | | | 0.04 | 0.46 | 0.11 | 0.10 | 0.10 | 0.22 |
| 8 | 0.05 | 0.15 | 2.7 | 2.8 | 0.023 | 0.030 | 2.2 | 0.10 | | | | | | 0.06 | 0.50 | 0.19 | 0.25 | 0.87 | 0.20 |
| 9 | 0.05 | 0.31 | 4.4 | 2.9 | 0.022 | 0.056 | | 0.15 | 0.0036 | | | | | 0.06 | 0.40 | 0.22 | 0.14 | 0.01 | 0.18 |
| 10 | 0.05 | 0.36 | 2.6 | 4.6 | 0.038 | 0.041 | | 0.17 | 0.0048 | | | | | 0.06 | 0.58 | 0.16 | 0.21 | 0.17 | 0.11 |
| 11 | 0.07 | 0.37 | 2.6 | 2.0 | 0.039 | 0.052 | 2.1 | 0.14 | | | | | | 0.06 | 0.50 | 0.13 | 0.34 | 0.33 | 0.14 |
| 12 | 0.07 | 0.33 | 2.6 | 3.2 | 0.063 | 0.053 | 2.5 | 0.14 | | | | | | 0.05 | 0.50 | 0.09 | 0.01 | 0.25 | 0.16 |
| 13 | 0.05 | 0.32 | 2.7 | 2.8 | 0.003 | 0.038 | | 0.13 | 0.0041 | | | | | 0.05 | 0.52 | 0.12 | 0.13 | 0.58 | 0.12 |
| 15 | 0.07 | 0.20 | 2.7 | 2.9 | 0.028 | 0.009 | 2.2 | 0.15 | | | | | | 0.05 | 0.44 | 0.10 | 0.07 | 0.55 | 0.04 |
| 16 | 0.06 | 0.62 | 2.6 | 2.8 | 0.029 | 0.018 | 2.2 | 0.12 | | | | | | 0.05 | 0.43 | 0.26 | 0.14 | 0.38 | 0.03 |
| 17 | 0.05 | 0.41 | 2.6 | 3.1 | 0.034 | 0.031 | 3.6 | 0.14 | | | | | | 0.07 | 0.48 | 0.17 | 0.05 | 0.55 | 0.08 |
| 18 | 0.08 | 0.31 | 2.7 | 3.0 | 0.023 | 0.032 | 0.1 | 0.10 | | | | | | 0.05 | 0.52 | 0.12 | 0.29 | 0.52 | 0.10 |
| 19 | 0.06 | 0.38 | 2.7 | 3.1 | 0.025 | 0.032 | 2.4 | 0.29 | | | | | | 0.04 | 0.53 | 0.19 | 0.10 | 0.21 | 0.08 |
| 20 | 0.05 | 0.34 | 2.7 | 3.1 | 0.030 | 0.036 | | 0.10 | 0.0140 | | | | | 0.07 | 0.37 | 0.21 | 0.21 | 0.49 | 0.11 |
| 21 | 0.06 | 0.42 | 2.6 | 3.1 | 0.035 | 0.057 | | 0.14 | 0.0006 | | | | | 0.07 | 0.44 | 0.20 | 0.27 | 0.47 | 0.14 |
| 22 | 0.05 | 0.32 | 2.6 | 2.8 | 0.031 | 0.041 | | 0.15 | 0.0036 | | | | | 0.06 | 0.36 | 0.20 | 0.07 | 0.43 | 0.13 |

Table 1 continued

| No. | Composition of Wire (mass%) | | | | | | | | | | | | | | | | | | | Li/Si |
|---|---|---|---|---|---|---|---|---|---|---|---|---|---|---|---|---|---|---|---|---|
| | C | Amount in terms of Si | Mn | Amount in terms of Ti | Al | Amount in terms of Li | Ni | Mo | B | Cu | Cr | Nb | V | Na+K | Mg+ Ca | F | $ZrO_2$ | $Al_2O_3$ | |
| 23 | 0.05 | 0.32 | 2.6 | 3.0 | 0.023 | 0.030 | 1.7 | 0.12 | | | | | | 0.06 | 0.40 | 0.25 | 0.06 | 0.44 | 0.09 |
| 24 | 0.06 | 0.30 | 2.6 | 2.8 | 0.028 | 0.036 | | 0.15 | 0.0058 | | | | | 0.05 | 0.58 | 0.24 | 0.21 | 0.40 | 0.12 |
| 25 | 0.05 | 0.34 | 2.6 | 3.0 | 0.038 | 0.031 | 1.6 | | | | | | | 0.04 | 0.32 | 0.19 | 0.10 | 0.53 | 0.09 |
| 26 | 0.06 | 0.32 | 2.7 | 3.2 | 0.038 | 0.037 | 1.6 | | | | | | | 0.05 | 0.42 | 0.11 | 0.26 | 0.38 | 0.12 |
| 27 | 0.06 | 0.33 | 2.6 | 3.0 | 0.038 | 0.048 | 2.0 | 0.11 | | | | | | 0.06 | 0.32 | 0.23 | 0.20 | 0.22 | 0.15 |
| 28 | 0.06 | 0.33 | 2.7 | 3.0 | 0.022 | 0.041 | | 0.19 | 0.0046 | 0.12 | | | | 0.06 | 0.38 | 0.15 | 0.42 | 0.13 | 0.12 |
| 29 | 0.06 | 0.36 | 2.7 | 2.8 | 0.028 | 0.048 | | 0.10 | 0.0048 | | 0.13 | | | 0.07 | 0.33 | 0.08 | 0.17 | 0.16 | 0.13 |
| 30 | 0.07 | 0.39 | 2.7 | 2.8 | 0.028 | 0.035 | 2.3 | 0.11 | | | | 0.009 | | 0.06 | 0.47 | 0.17 | 0.28 | 0.58 | 0.09 |
| 31 | 0.06 | 0.38 | 2.6 | 3.1 | 0.029 | 0.036 | 2.2 | 0.13 | | | | | 0.013 | 0.07 | 0.30 | 0.26 | 0.35 | 0.54 | 0.10 |

A 20° V groove was formed in an SM490A steel sheet having a thickness of 20 mm, and gas-shielded arc welding was performed under the following conditions by using a flux-cored wire of each of Examples.

Shielding gas: 20% $CO_2$-80% Ar mixed gas

Polarity: DCEP (direct current electrode positive)

Current-voltage-speed: 280 A-29 V-35 cpm

Heat input: 1.4 kJ/mm

Preheating temperature: 100°C-110°C

Interpass temperature: 140°C-160°C

Buildup procedure: 7 layers, 14 passes

Welding position: flat

The chemical component composition of the obtained weld metal according to each of Examples is shown in Table 2. The remainder of each weld metal consists of iron and inevitable impurities. In addition, with respect to the average composition of oxide-based inclusions having a minor diameter of 1 $\mu$m or more contained in the weld metal according to each of Examples, $Al_2O_3$+ $MnO$+$TiO_2$ are shown in Table 3. The remainder of the average composition of oxide-based inclusions having a minor diameter of 1 $\mu$m or more contained in the weld metal according to each of Examples consists of $SiO_2$, inevitable oxides and inevitable fluorides. Furthermore, the average composition of oxide-based inclusions having a minor diameter of 1 $\mu$m or more contained in the weld metal according to each of Examples was quantitatively analyzed by observing a polished surface of a micro sample, which was cut out from the weld metal, by means of an Electron Probe X-ray Micro Analyzer (EPMA, trade name: "JXA-8500F") manufactured by JEOL Datum Ltd. Details are as follows. The observation area at the polished surface of the micro sample was 100 $mm^2$, and the composition in the central part of an inclusion was quantitatively analyzed by characteristic X-ray wavelength dispersion spectrometry. Elements to be analyzed were Al, Si, Ti, Mg, Mn, Zr, Na, K, Cr and O (oxygen). After the relationship between the X-ray intensity of each element and the concentration of the element was previously determined as a calibration curve by using a known substance, the elements contained in each inclusion were quantitatively determined from the obtained X-ray intensity of the above-described inclusion to be analyzed and the calibration curve, and the composition of the inclusion was determined by arithmetic averaging of the results. Out of inclusions quantitatively determined in this way, an inclusion having an oxygen (O) content of 5 mass% or more is defined as an oxide-based inclusion. At this time, when a plurality of elements are observed in one oxide-based inclusion, the oxide composition was calculated from the ratio of the X-ray intensities showing existence of those elements by performing conversion to a single oxide of each element. In the present invention, values converted to mass as the above-described single oxides were averaged to determine the oxide composition.

The proportion in number of particles of oxide-based inclusions having a cubic crystal structure in particles of the oxide-based inclusions having a minor diameter of 1 $\mu$m or more contained in the weld metal according to each Example was determined in the following manner. The results thereof are also shown in Table 3.

(Method for determining proportion in number of particles of oxide-based inclusions having cubic crystal structure)

The weld metal was longitudinally cut, and a specimen for measuring a composition of an oxide-based inclusion was cut out of a central portion of the longitudinal section. The specimen was polished, and a 100-$mm^2$ observation area of the polished surface was first quantitatively analyzed to measure a composition of an oxide-based inclusion using the electron probe X-ray micro analyzer. In the analysis, the composition of a central portion of each of inclusions was quantitatively analyzed. This analysis was made with respect to Ca, Al, Si, Ti, Mg, Mn, Zr, Na, K, Cr, and O (oxygen) elements, a calibration curve regarding a relationship between X-ray intensity and element concentration was determined for each element beforehand using known substances, and each element contained in the inclusion being analyzed was quantified from an X-ray intensity obtained from the inclusion and the calibration curve. The quantified amounts were converted to mass amounts to determine the composition of the oxide-based inclusion.

Next, five oxide-based inclusions having an oxygen (O) content of 5 mass% or more were selected using the above technique. The five oxide-based inclusions were ones selected in order of size, with the largest oxide-based inclusion particle selected first, from the oxide-based inclusions present in the 100-$mm^2$ observation area. The reason why the oxide-based inclusions which were the largest in size were selected is that the toughness is considered to be more adversely affected by larger oxide-based inclusions. The oxide-based inclusions present in the observation area were compared in size with respect to the value of "(major diameter)$\times$(minor diameter)" thereof. The five selected oxide-based inclusions each had a minor diameter of 1 $\mu$m or more.

Next, the oxide-based inclusions to be examined were thinned by an FIB method (focused ion beam processing method) to a thickness in which the oxide-based inclusions were able to be examined with a TEM. The device used for the thinning was focused ion beam processing/examining device FB2000A, manufactured by Hitachi Ltd. The accelerating voltage was 30 kV, and Ga was used as an ion source. The thinned oxide-based inclusions were examined with a TEM. The device used in the TEM observation was field-emission transmission electron microscope JEM-2010F, manufactured by JEOL Ltd., and the conditions included an accelerating voltage of 200 kV, a photographing magnification of 10,000, and an overall magnification of 15,000 or 30,000. Each phase present in the oxides was identified by electron diffraction to ascertain whether the oxide-based inclusion had a cubic crystal structure.

In the case where an oxide-based inclusion being examined contained an oxide phase having a cubic crystal structure, this oxide-based inclusion was deemed to be "an oxide-based inclusion having a cubic crystal structure". The proportion in number of "oxide-based inclusions having a cubic crystal structure" in the five examined oxide-based inclusions was determined.

Table 2

| No. | Composition of Weld Metal (mass%) | | | | | | | | | | | | | |
|---|---|---|---|---|---|---|---|---|---|---|---|---|---|---|
| | C | Si | Mn | Ti | Al | O | N | Ni | Mo | B | Cu | Cr | Nb | V |
| 1 | 0.14 | 0.20 | 1.52 | 0.058 | 0.004 | 0.046 | 0.003 | 2.21 | 0.16 | | | | | |
| 2 | 0.08 | 0.53 | 1.69 | 0.069 | 0.006 | 0.054 | 0.005 | 2.49 | 0.14 | | | | | |
| 3 | 0.06 | 0.44 | 1.62 | 0.065 | 0.006 | 0.054 | 0.005 | | 0.16 | 0.0025 | | | | |
| 4 | 0.08 | 0.33 | 1.94 | 0.067 | 0.004 | 0.050 | 0.003 | | 0.10 | 0.0020 | | | | |
| 5 | 0.07 | 0.22 | 1.69 | 0.069 | 0.006 | 0.052 | 0.004 | 2.37 | 0.16 | | | | | |
| 6 | 0.07 | 0.18 | 1.88 | 0.056 | 0.004 | 0.040 | 0.003 | | 0.11 | 0.0023 | | | | |
| 8 | 0.06 | 0.08 | 1.54 | 0.063 | 0.004 | 0.055 | 0.003 | 2.59 | 0.11 | | | | | |
| 9 | 0.06 | 0.21 | 3.04 | 0.055 | 0.004 | 0.048 | 0.003 | | 0.15 | 0.0022 | | | | |
| 10 | 0.06 | 0.23 | 1.91 | 0.104 | 0.006 | 0.047 | 0.005 | | 0.19 | 0.0026 | | | | |
| 11 | 0.08 | 0.27 | 1.60 | 0.027 | 0.006 | 0.048 | 0.003 | 2.35 | 0.14 | | | | | |
| 12 | 0.07 | 0.21 | 1.92 | 0.068 | 0.012 | 0.055 | 0.005 | 2.55 | 0.17 | | | | | |
| 13 | 0.06 | 0.24 | 1.78 | 0.067 | 0.001 | 0.053 | 0.004 | | 0.15 | 0.0020 | | | | |
| 15 | 0.08 | 0.11 | 1.93 | 0.068 | 0.005 | 0.040 | 0.004 | 2.54 | 0.16 | | | | | |
| 16 | 0.07 | 0.46 | 1.82 | 0.055 | 0.005 | 0.042 | 0.005 | 2.49 | 0.14 | | | | | |
| 17 | 0.06 | 0.29 | 1.61 | 0.069 | 0.006 | 0.048 | 0.005 | 3.62 | 0.15 | | | | | |
| 18 | 0.08 | 0.22 | 1.94 | 0.061 | 0.004 | 0.040 | 0.003 | 0.26 | 0.10 | | | | | |
| 19 | 0.07 | 0.29 | 1.62 | 0.055 | 0.004 | 0.044 | 0.004 | 2.55 | 0.33 | | | | | |
| 20 | 0.06 | 0.25 | 1.79 | 0.061 | 0.005 | 0.046 | 0.004 | | 0.12 | 0.0075 | | | | |
| 21 | 0.07 | 0.29 | 1.87 | 0.065 | 0.006 | 0.041 | 0.003 | | 0.16 | 0.0003 | | | | |
| 22 | 0.06 | 0.26 | 1.54 | 0.063 | 0.005 | 0.042 | 0.003 | | 0.16 | 0.0019 | | | | |
| 23 | 0.07 | 0.23 | 1.52 | 0.067 | 0.004 | 0.043 | 0.004 | 2.07 | 0.14 | | | | | |
| 24 | 0.07 | 0.20 | 1.53 | 0.056 | 0.005 | 0.050 | 0.004 | | 0.19 | 0.0029 | | | | |
| 25 | 0.06 | 0.28 | 1.58 | 0.062 | 0.006 | 0.046 | 0.004 | 2.09 | | | | | | |
| 26 | 0.07 | 0.27 | 1.67 | 0.057 | 0.006 | 0.051 | 0.003 | 2.10 | | | | | | |
| 27 | 0.07 | 0.24 | 1.64 | 0.060 | 0.006 | 0.045 | 0.005 | 2.10 | 0.13 | | | | | |
| 28 | 0.07 | 0.21 | 1.63 | 0.060 | 0.004 | 0.053 | 0.004 | | 0.19 | 0.0026 | 0.11 | | | |
| 29 | 0.07 | 0.27 | 1.97 | 0.063 | 0.005 | 0.043 | 0.004 | | 0.14 | 0.0023 | | 0.13 | | |
| 30 | 0.08 | 0.27 | 1.83 | 0.058 | 0.005 | 0.055 | 0.004 | 2.38 | 0.14 | | | | 0.009 | |
| 31 | 0.07 | 0.26 | 1.62 | 0.061 | 0.005 | 0.047 | 0.003 | 2.55 | 0.13 | | | | | 0.012 |

Table 3

| No. | Al$_2$O$_3$+MnO+TiO$_2$ | Proportion in number of oxide-based inclusions having cubic crystal structure (%) |
| --- | --- | --- |
| 1 | 86 | 60 |
| 2 | 77 | 0 |
| 3 | 73 | 40 |
| 4 | 81 | 20 |
| 5 | 86 | 60 |
| 6 | 52 | 100 |
| 8 | 80 | 60 |
| 9 | 89 | 80 |
| 10 | 81 | 60 |
| 11 | 88 | 80 |
| 12 | 87 | 80 |
| 13 | 69 | 60 |
| 15 | 85 | 0 |
| 16 | 77 | 0 |
| 17 | 59 | 20 |
| 18 | 78 | 60 |
| 19 | 80 | 20 |
| 20 | 87 | 60 |
| 21 | 83 | 80 |
| 22 | 76 | 60 |
| 23 | 83 | 20 |
| 24 | 87 | 60 |
| 25 | 83 | 20 |
| 26 | 85 | 60 |
| 27 | 87 | 80 |
| 28 | 72 | 60 |
| 29 | 78 | 60 |
| 30 | 82 | 20 |
| 31 | 83 | 20 |

With respect to each of the obtained weld metals, various performances (strength, low-temperature toughness) were evaluated by the following evaluation tests. These evaluation results are shown in Table 4.

(Strength)

A tensile test piece in conformity with JIS Z2202 was sampled from the central part of the weld metal in parallel to the weld line and subjected to a tensile test, and those having a tensile strength in excess of 490 MPa were judged to be passed.

(Low-Temperature Toughness)

A Charpy impact test piece (JIS Z3111 No. 4 V-notched specimen) was sampled vertically to the weld line direction from a thickness central part of the weld metal, and the energy absorption and the brittle fracture rate at -40°C were measured in a manner prescribed in JIS Z2242. Those having, as the average value of three measurements, an absorption energy at -40°C of 47 J or more and a brittle fracture rate of 20% or less were judged to have excellent low-temperature toughness.

In addition, when formation of convex bead shape in vertical position, formation of blowhole, deterioration of bead wettability, generation of spatter, deterioration of bead smoothness, deterioration of porosity resistance, deterioration of welding workability, occurrence of high-temperature cracking, etc., took place, these are shown together as other properties in Table 4.

Table 4

| No. | Tensile Strength | Brittle Fracture Rate (-40°C) | Absorption Energy (-40°C) | Other Properties |
|---|---|---|---|---|
| 1 | 887 | 61 | 15 | formation of convex bead shape in vertical position |
| 2 | 796 | 45 | 20 | good |
| 3 | 664 | 19 | 50 | good |
| 4 | 727 | 9 | 73 | good |
| 5 | 745 | 0 | 99 | good |
| 6 | 688 | 7 | 83 | good |
| 8 | 691 | 17 | 49 | blowhole, deterioration of bead wettability, generation of spatter |
| 9 | 813 | 75 | 21 | deterioration of bead smoothness |
| 10 | 738 | 31 | 37 | good |
| 11 | 678 | 21 | 44 | formation of convex bead shape in vertical position, deterioration of porosity resistance |
| 12 | 781 | 68 | 13 | deterioration of bead smoothness |
| 13 | 659 | 12 | 66 | blowhole, deterioration of bead smoothness |
| 15 | 796 | 42 | 33 | good |
| 16 | 782 | 33 | 41 | good |
| 17 | 765 | 9 | 86 | occurrence of high-temperature cracking |
| 18 | 704 | 30 | 39 | good |
| 19 | 777 | 17 | 68 | good |
| 20 | 723 | 13 | 58 | occurrence of high-temperature cracking |
| 21 | 680 | 22 | 41 | good |
| 22 | 632 | 0 | 103 | good |
| 23 | 709 | 6 | 88 | good |
| 24 | 667 | 0 | 95 | good |
| 25 | 674 | 7 | 86 | good |
| 26 | 709 | 0 | 99 | good |
| 27 | 724 | 0 | 100 | good |
| 28 | 677 | 0 | 96 | good |
| 29 | 711 | 2 | 93 | good |
| 30 | 787 | 9 | 81 | good |
| 31 | 742 | 7 | 78 | good |

Example 1 was poor in low-temperature toughness, because the C amount in the wire was as high as 0.14% and the C amount in the weld metal was as high as 0.14%. Furthermore, since a $ZrO_2$ amount in the wire was as high as 0.55%, the vertical welding resulted in a convex bead shape.

Example 2 was poor in low-temperature toughness, because the amount in terms of Si in the wire was as high as 0.78% and the Li/Si was as small as 0.04 and the Si amount in the weld metal was as high as 0.53%.

In Example 8, blowholes were generated because the amount in terms of Si in the wire was as low as 0.15% and the Si amount in the weld metal was as low as 0.08%. Furthermore, since the $Al_2O_3$ amount in the wire was as high as 0.87%, the welding resulted in poor bead conformability and generation of spatter.

Example 9 was poor in low-temperature toughness, because the Mn amount in the wire was as high as 4.4% and the Mn amount in the weld metal was as high as 3.04 mass%. Furthermore, since the $Al_2O_3$ amount in the wire was as low as 0.01%, the welding resulted in poor bead smoothness.

Example 10 was poor in low-temperature toughness, because the amount in terms of Ti in the wire was as high as 4.6% and the Ti amount in the weld metal was as high as 0.104%.

In Example 11, low-temperature toughness was poor and the vertical welding resulted in a convex bead shape, so that the porosity resistance deteriorated, because the amount in terms of Ti in the wire was as low as 2.0% and the Ti amount in the weld metal was as low as 0.027%.

Example 12 was poor in low-temperature toughness, because the Al amount in the wire was as high as 0.063% and the Al amount in the weld metal was as high as 0.012%. Furthermore, since the $ZrO_2$ amount in the wire was as high as 0.01%, the welding resulted in poor bead smoothness.

In Example 13, blowholes were generated and bead smoothness deteriorated, because the Al amount in the wire was as low as 0.003% and the Al amount in the weld metal was as low as 0.001%.

Example 15 was poor in low-temperature toughness, because the amount in terms of Li in the wire was as low as 0.009% and the oxide-based inclusions having a minor diameter of 1 $\mu$m or more contained in the weld metal included no particle including an oxide phase having a cubic crystal structure.

Example 16 was poor in low-temperature toughness, because the oxide-based inclusions having a minor diameter of 1 $\mu$m or more contained in the weld metal included no particle containing an oxide phase having a cubic crystal structure.

In Example 17, high-temperature cracking occurred because the Ni amount in the wire was as high as 3.6% and the Ni amount in the weld metal was as high as 3.62%.

Example 18 was poor in low-temperature toughness, because the Ni amount in the wire was as low as 0.1% and the Ni amount in the weld metal was as low as 0.26%.

In Example 20, high-temperature cracking occurred because the B amount in the wire was as high as 0.0140% and the B amount in the weld metal was as high as 0.0075%.

Example 21 was poor in low-temperature toughness, because the amount in the wire was as low as 0.0006% and the B amount in the weld metal was as low as 0.0003%.

Meanwhile, the weld metals of Examples 3 to 6, 19, and 22 to 31 had excellent low-temperature toughness and were satisfactory in terms of the other properties.

(Examples 32 to 56)

Flux-cored wires of Examples 32 to 56 having the chemical compositions shown in Table 5 below were produced, under the conditions of a wire diameter of 1.2 mm and a flux filling rate of 13.5%. In Table 5, "Amount in terms of Si" means the amount in terms of Si in an Si alloy and an Si compound, "Amount in terms of Ti" means the amount in terms of Ti in a Ti alloy and a Ti compound, and "Amount in terms of Li" means the amount in terms of Li in an Li alloy and an Li compound.

Table 5

| No. | C | Amount in Terms of Si | Mn | Amount in Terms of Ti | Al | Amount in Terms of Li | Ni | B | ZrO$_2$ | Al$_2$O$_3$ | Cu | Cr |
|---|---|---|---|---|---|---|---|---|---|---|---|---|
| 32 | 0.05 | 0.30 | 2.3 | 3.4 | 0.034 | 0.032 | 2.5 | 0.0026 | 0.14 | 0.17 | 0.01 | |
| 33 | 0.06 | 0.29 | 2.4 | 3.9 | 0.019 | 0.042 | 2.4 | 0.0025 | 0.15 | 0.39 | 0.02 | |
| 34 | 0.06 | 0.30 | 2.1 | 3.8 | 0.046 | 0.032 | 2.3 | 0.0021 | 0.15 | 0.40 | 0.02 | |
| 35 | 0.07 | 0.25 | 2.4 | 3.8 | 0.009 | 0.035 | 2.4 | 0.0029 | 0.15 | 0.39 | 0.01 | 0.03 |
| 36 | 0.08 | 0.25 | 1.7 | 3.4 | 0.046 | 0.040 | 2.3 | 0.0062 | 0.14 | 0.52 | 0.03 | 0.07 |
| 37 | 0.07 | 0.22 | 2.4 | 2.9 | 0.031 | 0.034 | 2.4 | 0.0024 | 0.15 | 0.05 | 0.04 | |
| 38 | 0.10 | 0.37 | 2.9 | 3.4 | 0.020 | 0.040 | 1.8 | 0.0031 | 0.16 | 0.40 | 0.02 | 0.09 |
| 39 | 0.09 | 0.55 | 2.4 | 3.2 | 0.010 | 0.043 | 1.3 | 0.0010 | 0.11 | 0.15 | 0.02 | |
| 40 | 0.05 | 0.30 | 1.5 | 2.4 | 0.016 | 0.032 | 2.2 | 0.0059 | 0.15 | 0.33 | 0.23 | |
| 41 | 0.08 | 0.23 | 2.4 | 3.8 | 0.018 | 0.040 | 2.7 | 0.0020 | 0.25 | 0.65 | 0.05 | 0.25 |
| 42 | 0.03 | 0.38 | 3.4 | 3.8 | 0.011 | 0.035 | 2.8 | 0.0018 | 0.48 | 0.33 | 0.03 | 0.78 |
| 43 | 0.09 | 0.55 | 2.8 | 3.7 | 0.013 | 0.042 | 2.2 | 0.0028 | 0.33 | 0.40 | 0.32 | 0.10 |
| 44 | 0.10 | 0.31 | 1.4 | 2.9 | 0.015 | 0.045 | 3.2 | 0.0011 | 0.18 | 0.52 | 0.02 | 0.09 |

Table 5 continued

| No. | Mo | Nb | V | Na+K | Mg+Ca | Fe and others | Li/Si |
|-----|------|-------|-------|------|-------|---------------|-------|
| 32  |      |       | 0.010 | 0.06 | 0.42  | 90.6          | 0.11  |
| 33  |      |       | 0.010 | 0.06 | 0.48  | 89.8          | 0.14  |
| 34  |      |       | 0.009 | 0.06 | 0.44  | 90.3          | 0.11  |
| 35  | 0.15 |       | 0.010 | 0.06 | 0.50  | 89.7          | 0.14  |
| 36  | 0.15 |       | 0.010 | 0.06 | 0.50  | 90.7          | 0.16  |
| 37  | 0.15 |       | 0.010 | 0.08 | 0.42  | 91.0          | 0.15  |
| 38  |      | 0.005 | 0.010 | 0.06 | 0.46  | 90.2          | 0.11  |
| 39  | 0.13 |       | 0.010 | 0.05 | 0.50  | 91.4          | 0.08  |
| 40  | 0.28 |       | 0.010 | 0.05 | 0.42  | 92.0          | 0.11  |
| 41  | 0.14 |       | 0.010 | 0.02 | 0.49  | 88.9          | 0.17  |
| 42  | 0.16 | 0.009 | 0.010 | 0.85 | 0.42  | 86.5          | 0.09  |
| 43  | 0.05 |       | 0.011 | 0.06 | 0.50  | 88.8          | 0.08  |
| 44  | 0.22 |       | 0.009 | 0.35 | 0.46  | 90.2          | 0.15  |

Table 5 continued

| No. | C | Amount in Terms of Si | Mn | Amount in Terms of Ti | Al | Amount in Terms of Li | Ni | B | $ZrO_2$ | $Al_2O_3$ | Cu | Cr |
|-----|------|------|-----|------|-------|-------|-----|--------|------|------|------|------|
| 45 | 0.06 | 0.60 | 2.6 | 3.2 | 0.005 | 0.035 | 2.5 | 0.0021 | 0.08 | 0.45 | 0.14 | 0.08 |
| 46 | 0.10 | 0.65 | 2.3 | 2.8 | 0.034 | 0.038 | 1.0 | 0.0029 | 0.21 | 0.46 | 0.02 | 0.26 |
| 47 | 0.14 | 0.45 | 2.2 | 3.4 | 0.016 | 0.032 | 2.2 | 0.0035 | 0.42 | 0.39 | 0.01 | |
| 48 | 0.07 | 0.71 | 2.6 | 4.2 | 0.023 | 0.108 | 2.2 | 0.0031 | 0.39 | 0.27 | 0.01 | 0.02 |
| 49 | 0.07 | 0.31 | 0.9 | 2.8 | 0.025 | 0.045 | 2.1 | 0.0024 | 0.33 | 0.30 | 0.02 | |
| 50 | 0.07 | 0.18 | 2.6 | 2.2 | 0.019 | 0.035 | 2.4 | 0.0005 | 0.16 | 0.40 | 0.01 | |
| 51 | 0.05 | 0.75 | 1.4 | 1.8 | 0.026 | 0.030 | 2.1 | 0.0024 | 0.15 | 0.30 | 0.01 | 0.03 |
| 52 | 0.06 | 0.25 | 2.0 | 4.4 | 0.086 | 0.032 | 2.2 | 0.0030 | 0.40 | 0.56 | 0.01 | 0.02 |
| 53 | 0.07 | 0.39 | 2.7 | 3.4 | 0.028 | 0.000 | 2.2 | 0.0028 | 0.45 | 0.39 | 0.01 | 0.02 |
| 54 | 0.06 | 0.31 | 2.4 | 3.6 | 0.027 | 0.031 | 0.5 | 0.0030 | 0.21 | 0.25 | 0.01 | |
| 55 | 0.08 | 0.45 | 2.6 | 3.4 | 0.021 | 0.038 | 3.6 | 0.0027 | 0.29 | 0.25 | 0.01 | |
| 56 | 0.08 | 0.45 | 2.6 | 3.0 | 0.027 | 0.018 | 2.3 | 0.0024 | 0.41 | 0.22 | 0.01 | |

Table 5 continued

| No. | Mo | Nb | V | Na+K | Mg+Ca | Fe and others | Li/Si |
|---|---|---|---|---|---|---|---|
| 45 | 0.11 | | 0.014 | 0.35 | 0.42 | 89.4 | 0.06 |
| 46 | 0.06 | 0.011 | 0.009 | 0.55 | 0.50 | 91.0 | 0.06 |
| 47 | 0.14 | | 0.008 | 0.06 | 0.44 | 90.1 | 0.07 |
| 48 | 0.12 | | 0.010 | 0.06 | 0.42 | 88.8 | 0.15 |
| 49 | 0.13 | | 0.007 | 0.06 | 0.43 | 92.5 | 0.15 |
| 50 | 0.15 | | 0.010 | 0.06 | 0.44 | 91.3 | 0.19 |
| 51 | | | 0.009 | 0.06 | 0.41 | 92.9 | 0.04 |
| 52 | 0.02 | | 0.010 | 0.06 | 0.42 | 89.5 | 0.13 |
| 53 | 0.15 | | 0.009 | 0.06 | 0.41 | 89.7 | 0.00 |
| 54 | 0.14 | | 0.009 | 0.06 | 0.48 | 91.9 | 0.10 |
| 55 | 0.14 | | 0.012 | 0.06 | 0.45 | 88.6 | 0.08 |
| 56 | 0.15 | | 0.006 | 0.06 | 0.41 | 90.3 | 0.04 |

A groove having a 20° V shape was formed in steel plate SM490A having a sheet thickness of 20 mm, and gas-shielded arc welding was conducted using the flux-cored wire of each Example under the following conditions.

Shielding gas: 20% $CO_2$ - 80% Ar mixed gas
Polarity: DCEP (direct-current electrode positive)

Current-voltage-speed: 280 A - 29 V - 35 cpm
Heat input: 1.4 kJ/mm
Preheating temperature: 100-110°C
Interpass temperature: 140-160°C
Stacking method: 7 layers, 14 passes
Welding position: flat

The chemical component composition of the obtained weld metal according to each of Examples is shown in Table 6. The remainder of each weld metal consists of iron and inevitable impurities. In addition, with respect to the average composition of oxide-based inclusions having a minor diameter of 1 μm or more contained in the weld metal according to each of Examples, $Al_2O_3$+MnO+$TiO_2$ are shown in Table 6. The remainder of the average composition of oxide-based inclusions having a minor diameter of 1 μm or more contained in the weld metal according to each of Examples consists of $SiO_2$, inevitable oxides and inevitable fluorides.

In addition, the rate of acicular ferrite formation in the weld metal was measured as followings.

First, the weld metal was cut at a surface perpendicular to the welding direction and etched with nital (nitric acid:ethanol=5:95). Subsequently, a range of 165 μm×219 μm of the unmodified portion of the final pass was photographed by an optical microscope at a magnification of 400 in four visual fields and out of inclusion particles on the photograph, those having an equivalent-circle diameter of 1.5 μm or more were selected. Then, a structure extending radially from an inclusion particle was defined as acicular ferrite, and the rate of acicular ferrite formation (%) was measured based on the following formula:

$$\text{Rate of acicular ferrite formation (\%)} = (\text{number of inclusions acting as a start}$$

$$\text{point of acicular ferrite/number of all inclusions}) \times 100$$

The low-temperature toughness of the weld metals obtained was evaluated by the following evaluation test.

Charpy impact specimens (JIS Z3111, No.4 V-notched specimens) were taken out, along a direction perpendicular to the weld line direction, from a thickness-direction center portion of each weld metal, and a -60°C absorption energy and a brittle fracture rate were measured by the method according to JIS Z 2242. The notches were formed in two positions, i.e., a cross-sectional center portion (pass contacting portion) of the weld metal and a pass center portion, which included a larger amount of reheated coarse-grain regions. The results of this evaluation are shown in Table 6, in which the column "Center portion" shows the results of the evaluation of the specimens having a notch formed in the cross-sectional center portion (pass contacting portion) of the weld metal and the column "Shifted" shows the results of the evaluation of the specimens having a notch formed in the pass center portion, which included a larger amount of reheated coarse-grain regions. In cases when a weld metal had a -60°C absorption energy of 60 J or more and a brittle fracture rate of 33% or less, each as an average of three measurements, the weld metal was rated as especially excellent in terms of low-temperature toughness.

The results of the evaluation of welding workability are also shown in Table 6.

Table 6

| No. | C | Si | Mn | Ti | Al | Ni | B | N | O | Cu | Cr | Mo | Nb | V |
|-----|------|------|------|-------|-------|------|--------|--------|-------|------|------|------|-------|-------|
| 32 | 0.071 | 0.22 | 1.72 | 0.066 | 0.008 | 2.70 | 0.0018 | 0.0045 | 0.050 | | | | | |
| 33 | 0.065 | 0.26 | 1.80 | 0.081 | 0.005 | 2.66 | 0.0015 | 0.0046 | 0.046 | | | | | |
| 34 | 0.070 | 0.24 | 1.61 | 0.076 | 0.009 | 2.51 | 0.0015 | 0.0047 | 0.052 | 0.02 | | | | 0.008 |
| 35 | 0.070 | 0.25 | 1.82 | 0.076 | 0.004 | 2.53 | 0.0017 | 0.0044 | 0.050 | 0.01 | 0.02 | 0.15 | | 0.008 |
| 36 | 0.082 | 0.26 | 1.34 | 0.068 | 0.009 | 2.57 | 0.0038 | 0.0044 | 0.033 | 0.02 | 0.05 | 0.15 | | 0.008 |
| 37 | 0.072 | 0.19 | 1.79 | 0.048 | 0.006 | 2.66 | 0.0016 | 0.0043 | 0.049 | 0.02 | | 0.15 | | 0.008 |
| 38 | 0.093 | 0.36 | 2.16 | 0.066 | 0.005 | 1.81 | 0.0019 | 0.0045 | 0.053 | 0.02 | 0.08 | | 0.003 | 0.008 |
| 39 | 0.088 | 0.41 | 1.74 | 0.063 | 0.004 | 1.44 | 0.0009 | 0.0041 | 0.057 | 0.02 | | 0.14 | | 0.010 |
| 40 | 0.054 | 0.25 | 1.24 | 0.038 | 0.005 | 2.37 | 0.0032 | 0.0040 | 0.047 | 0.22 | | 0.28 | | 0.008 |
| 41 | 0.078 | 0.20 | 1.83 | 0.069 | 0.005 | 2.90 | 0.0011 | 0.0047 | 0.066 | 0.05 | 0.20 | 0.15 | | 0.008 |
| 42 | 0.045 | 0.36 | 2.35 | 0.072 | 0.004 | 2.85 | 0.0012 | 0.0055 | 0.049 | 0.02 | 0.75 | 0.18 | 0.008 | 0.008 |
| 43 | 0.084 | 0.41 | 1.98 | 0.072 | 0.005 | 2.38 | 0.0016 | 0.0046 | 0.041 | 0.33 | 0.10 | 0.05 | | 0.009 |
| 44 | 0.098 | 0.27 | 1.15 | 0.051 | 0.005 | 3.33 | 0.0006 | 0.0047 | 0.051 | 0.02 | 0.08 | 0.22 | | 0.008 |

Table 6 continued

| No. | Oxide | Rate of AF | Center portion | | Shifted | | Workability |
| | $Al_2O_3+MnO+TiO_2$ | Formation (%) | $vE_{-60}$ (J) | Brittle Fracture Rate (%) | $vE_{-60}$ (J) | Brittle Fracture Rate (%) | |
|---|---|---|---|---|---|---|---|
| 32 | 95 | 24 | 72 | 15 | 65 | 20 | passed |
| 33 | 94 | 24 | 66 | 22 | 62 | 27 | passed |
| 34 | 93 | 17 | 90 | 13 | 84 | 13 | passed |
| 35 | 94 | 23 | 89 | 10 | 62 | 25 | passed |
| 36 | 95 | 18 | 71 | 22 | 64 | 25 | passed |
| 37 | 93 | 22 | 75 | 8 | 70 | 17 | passed |
| 38 | 95 | 33 | 71 | 15 | 65 | 20 | passed |
| 39 | 97 | 31 | 68 | 22 | 64 | 24 | passed |
| 40 | 73 | 16 | 65 | 27 | 62 | 25 | passed |
| 41 | 81 | 27 | 64 | 23 | 61 | 27 | passed |
| 42 | 97 | 33 | 65 | 28 | 60 | 32 | passed |
| 43 | 96 | 27 | 78 | 8 | 73 | 12 | passed |
| 44 | 92 | 24 | 67 | 18 | 62 | 23 | passed |

Table 6 continued

| No. | C | Si | Mn | Ti | Al | Ni | B | N | O | Cu | Cr | Mo | Nb | V |
|-----|-----|-----|-----|-----|-----|-----|-----|-----|-----|-----|-----|-----|-----|-----|
| 45 | 0.065 | 0.44 | 1.99 | 0.055 | 0.002 | 2.63 | 0.0015 | 0.0048 | 0.054 | 0.15 | 0.08 | 0.10 | | 0.014 |
| 46 | 0.095 | 0.39 | 1.68 | 0.052 | 0.008 | 1.15 | 0.0016 | 0.0042 | 0.048 | 0.01 | 0.25 | 0.05 | 0.012 | 0.009 |
| 47 | 0.125 | 0.35 | 1.56 | 0.066 | 0.005 | 2.47 | 0.0019 | 0.0041 | 0.049 | 0.02 | | 0.15 | | 0.007 |
| 48 | 0.076 | 0.51 | 1.91 | 0.094 | 0.006 | 2.23 | 0.0018 | 0.0036 | 0.048 | 0.01 | 0.02 | 0.13 | | 0.010 |
| 49 | 0.074 | 0.25 | 0.90 | 0.041 | 0.007 | 2.33 | 0.0016 | 0.0049 | 0.055 | 0.01 | | 0.15 | | 0.008 |
| 50 | 0.074 | 0.18 | 1.85 | 0.025 | 0.005 | 2.68 | 0.0003 | 0.0044 | 0.053 | 0.01 | | 0.15 | | 0.008 |
| 51 | 0.055 | 0.48 | 1.16 | 0.020 | 0.006 | 2.21 | 0.0020 | 0.0046 | 0.049 | 0.01 | 0.05 | | | 0.008 |
| 52 | 0.067 | 0.23 | 1.52 | 0.120 | 0.021 | 2.47 | 0.0020 | 0.0049 | 0.057 | 0.01 | 0.02 | 0.01 | | 0.008 |
| 53 | 0.075 | 0.35 | 1.92 | 0.076 | 0.006 | 2.47 | 0.0018 | 0.0037 | 0.052 | 0.01 | 0.02 | 0.14 | | 0.009 |
| 54 | 0.068 | 0.25 | 1.76 | 0.077 | 0.006 | 0.52 | 0.0019 | 0.0045 | 0.055 | 0.02 | | 0.15 | | 0.008 |
| 55 | 0.074 | 0.41 | 1.90 | 0.070 | 0.005 | 3.72 | 0.0018 | 0.0042 | 0.045 | 0.01 | | 0.14 | | 0.009 |
| 56 | 0.077 | 0.48 | 1.88 | 0.061 | 0.006 | 2.34 | 0.0018 | 0.0050 | 0.056 | 0.01 | | 0.15 | | 0.008 |

Table 6 continued

| No. | Oxide Al$_2$O$_3$+MnO+TiO$_2$ | Rate of AF Formation (%) | Center portion | | Shifted | | Workability |
|---|---|---|---|---|---|---|---|
| | | | vE$_{-60}$ (J) | Brittle Fracture Rate (%) | vE$_{-60}$ (J) | Brittle Fracture Rate (%) | |
| 45 | 96 | 35 | 66 | 18 | 61 | 23 | passed |
| 46 | 98 | 15 | 67 | 28 | 62 | 30 | passed |
| 47 | 97 | 27 | 32 | 50 | 25 | 70 | passed |
| 48 | 95 | 27 | 55 | 33 | 45 | 55 | passed |
| 49 | 95 | 28 | 66 | 35 | 60 | 40 | passed |
| 50 | 98 | 25 | 54 | 36 | 25 | 70 | failed |
| 51 | 90 | 12 | 37 | 62 | 25 | 77 | passed |
| 52 | 97 | 11 | 27 | 65 | 15 | 82 | passed |
| 53 | 96 | 13 | 58 | 35 | 45 | 50 | passed |
| 54 | 92 | 13 | 45 | 40 | 35 | 40 | passed |
| 55 | 97 | 20 | 55 | 25 | 50 | 25 | passed |
| 56 | 98 | 11 | 36 | 65 | 25 | 74 | passed |

The weld metals of Examples 32 to 46, which had been obtained using wires containing both of Ni: from 0.80 to 3.50 mass% and B: from 0.0008 to 0.012 mass% and which contained both of Ni: from 0.80 to 3.50 mass% and B: from 0.0005 to 0.0070 mass% and had a rate of acicular ferrite formation of 15% or more, each had a -60°C absorption energy of 60 J or more and a brittle fracture rate of 33% or less, each as an average of three measurements. These weld metals were especially excellent in terms of low-temperature toughness.

Examples 57 to 79 below are examples for describing the effects of the second embodiment.

(Examples 57 to 79)

Flux-cored wires of Examples 57 to 79 having the chemical compositions shown in Table 7 below were produced, under the conditions of a wire diameter of 1.2 mm and a flux filling rate of 13.5%. The remainder of each flux-cored wire was iron and inevitable impurities. In Table 7, "Amount in terms of Si" means Si amount in terms of the amount in an Si alloy and an Si compound; "Amount in terms of Ti" means the amount in terms of Ti in a Ti alloy and a Ti compound; and "Amount in terms of Li" means the amount in terms of Li in an Li alloy and an Li compound.

Table 7

| No. | C | Amount in Terms of Si | Mn | Amount in Terms of Ti | Ni | B | Ca | Amount in Terms of Li | ZrO$_2$ | Al$_2$O$_3$ | Al | Cu | Cr | Mo | Nb | V | Mg | K+Na | F | Fe and others |
|---|---|---|---|---|---|---|---|---|---|---|---|---|---|---|---|---|---|---|---|---|
| 57 | 0.06 | 0.27 | 2.7 | 3.0 | 2.1 | 0.0008 | 0.062 | 0.030 | | | | | | | | | | | | 91.8 |
| 58 | 0.05 | 0.24 | 3.0 | 2.6 | 1.8 | 0.0008 | 0.062 | 0.055 | 0.16 | | | | | | | | | | | 92.0 |
| 59 | 0.07 | 0.23 | 3.1 | 2.7 | 2.4 | 0.0011 | 0.080 | 0.030 | 0.11 | 0.16 | | | | | | | | | | 91.1 |
| 60 | 0.07 | 0.27 | 2.7 | 2.8 | 2.2 | 0.0009 | 0.062 | 0.020 | 0.25 | 0.35 | 0.008 | | | | | | | | | 91.3 |
| 61 | 0.08 | 0.26 | 2.8 | 2.6 | 1.2 | 0.0065 | 0.080 | 0.035 | 0.25 | 0.38 | 0.008 | | | | | 0.01 | 0.36 | 0.10 | | 91.8 |
| 62 | 0.09 | 0.22 | 2.9 | 4.0 | 1.0 | 0.0035 | 0.080 | 0.025 | 0.25 | 0.35 | 0.008 | | | | | 0.01 | 0.55 | | 0.24 | 90.3 |
| 63 | 0.10 | 0.27 | 2.6 | 2.5 | 2.3 | 0.0013 | 0.062 | 0.070 | 0.25 | 0.35 | 0.011 | 0.02 | 0.03 | 0.05 | | 0.01 | 0.55 | 0.05 | 0.18 | 90.6 |
| 64 | 0.08 | 0.21 | 3.2 | 3.3 | 2.2 | 0.0007 | 0.114 | 0.055 | 0.15 | 0.38 | 0.008 | | | | | 0.01 | 0.26 | 0.05 | 0.15 | 89.8 |
| 65 | 0.08 | 0.34 | 2.7 | 2.9 | 2.3 | 0.0025 | 0.035 | 0.030 | 0.18 | 0.55 | 0.008 | 0.02 | 0.02 | 0.14 | | 0.01 | 0.15 | 0.06 | 0.10 | 90.4 |
| 66 | 0.07 | 0.30 | 2.5 | 3.1 | 2.2 | 0.0027 | 0.035 | 0.015 | 0.25 | 0.35 | 0.009 | 0.02 | 0.02 | 0.15 | | 0.01 | 0.24 | 0.05 | 0.20 | 90.5 |
| 67 | 0.07 | 0.34 | 2.5 | 2.8 | 2.3 | 0.0021 | 0.062 | 0.030 | 0.25 | 0.05 | 0.008 | 0.02 | 0.03 | 0.14 | | 0.01 | 0.01 | 0.18 | 0.21 | 91.0 |
| 68 | 0.07 | 0.29 | 2.6 | 2.4 | 2.5 | 0.0027 | 0.070 | 0.090 | 0.10 | 0.20 | 0.031 | 0.01 | | 0.31 | | 0.01 | 0.34 | 0.02 | 0.05 | 90.9 |
| 69 | 0.03 | 0.29 | 2.7 | 3.9 | 3.1 | 0.0017 | 0.070 | 0.060 | 0.25 | 0.63 | 0.046 | 0.12 | | | | 0.01 | 0.44 | 0.01 | 0.58 | 87.8 |
| 70 | 0.08 | 0.22 | 2.9 | 2.8 | 2.3 | 0.0009 | 0.032 | 0.055 | 0.45 | 0.55 | 0.019 | 0.02 | 0.48 | | | 0.01 | 0.55 | 0.01 | 0.77 | 88.8 |
| 71 | 0.10 | 0.33 | 3.2 | 2.5 | 1.8 | 0.0006 | 0.140 | 0.040 | 0.32 | 0.21 | | 0.01 | 0.03 | 0.05 | 0.01 | 0.01 | 0.81 | 0.01 | 0.31 | 90.1 |
| 72 | 0.12 | 0.27 | 3.1 | 2.8 | 2.1 | 0.0002 | 0.128 | 0.035 | 0.19 | 0.34 | 0.006 | 0.01 | 0.05 | | | 0.02 | 0.68 | 0.43 | 0.28 | 89.4 |
| 73 | 0.08 | 0.31 | 2.4 | 3.2 | 2.0 | 0.0027 | 0.061 | 0.030 | 0.34 | 0.58 | 0.014 | 0.01 | 0.02 | 0.15 | | 0.01 | 0.55 | 0.05 | 0.12 | 90.1 |
| 74 | 0.08 | 0.17 | 2.8 | 2.6 | 2.3 | 0.0018 | 0.055 | 0.030 | 0.25 | 0.41 | 0.014 | 0.01 | 0.01 | 0.10 | | 0.01 | 0.46 | 0.06 | 0.33 | 90.3 |
| 75 | 0.08 | 0.24 | 2.9 | 2.2 | 0.8 | 0.0016 | 0.077 | 0.020 | 0.24 | 0.36 | 0.013 | 0.02 | 0.02 | | | 0.01 | 0.34 | 0.05 | 0.15 | 92.5 |
| 76 | 0.07 | 0.27 | 2.9 | 4.1 | 2.0 | 0.0010 | 0.025 | 0.015 | 0.25 | 0.20 | 0.059 | 0.02 | 0.01 | | | 0.01 | 0.28 | 0.05 | 0.14 | 89.6 |
| 77 | 0.08 | 0.37 | 2.6 | 2.6 | 2.1 | 0.0008 | 0.066 | 0.025 | 0.25 | 0.30 | 0.007 | 0.01 | 0.01 | | | 0.01 | 0.51 | 0.05 | 0.18 | 90.8 |
| 78 | 0.09 | 0.27 | 3.4 | 3.0 | 2.4 | 0.0008 | 0.035 | 0.025 | 0.25 | 0.30 | 0.012 | 0.02 | 0.01 | | | 0.01 | 0.55 | 0.05 | 0.20 | 89.4 |
| 79 | 0.06 | 0.26 | 2.8 | 2.8 | 1.8 | 0.0026 | 0.070 | 0.005 | 0.25 | 0.34 | 0.013 | 0.02 | 0.01 | | | 0.01 | 0.36 | 0.06 | 0.10 | 91.0 |

A 20° V groove was formed in an SM490A steel sheet having a thickness of 20 mm, and gas-shielded arc welding was performed under the following conditions by using a flux-cored wire of each of Examples.

Shielding gas: A 20% $CO_2$-80% Ar mixed gas

Polarity: DCEP (direct current electrode positive)

Current-voltage-speed: 280 A-29 V-35 cpm

Heat input: 1.4 kJ/mm

Preheating temperature: 100°C-110°C

Interpass temperature: 140°C-160°C

Buildup procedure: 7 layers, 14 passes

Welding position: flat

The chemical component composition of the obtained weld metal according to each of Examples is shown in Table 8. The remainder of each weld metal consists of iron and inevitable impurities.

In addition, the rate of acicular ferrite formation in the weld metal was measured as follows.

First, the weld metal was cut at a surface perpendicular to the welding direction and etched with nital (nitric acid:ethanol=5:95). Subsequently, a range of 165 $\mu$m$\times$219 $\mu$m of the unmodified portion of the final pass was photographed by an optical microscope at a magnification of 400 in four visual fields and out of inclusion particles on the photograph, those having an equivalent-circle diameter of 1.5 $\mu$m or more were selected. Then, a structure extended radially from an inclusion particle was defined as acicular ferrite, and the rate of acicular ferrite formation (%) was measured based on the following formula:

$$\text{Rate of acicular ferrite formation (\%)} = (\text{number of inclusions acting as a start}$$

$$\text{point of acicular ferrite/number of all inclusions})\times 100$$

The weld metals obtained were evaluated for low-temperature toughness by the following evaluation test. The results of the evaluation are shown in Table 8.

Charpy impact specimens (JIS Z3111, No.4 V-notched specimens) were taken out, along a direction perpendicular to the weld line direction, from a thickness-direction center portion of each weld metal, and -60°C absorption energy ($vE_{-60}$), brittle fracture rate, and -80°C absorption energy ($vE_{-80}$) were measured by the method according to JIS Z 2242. The results of this evaluation are shown in Table 8. In cases when a weld metal had a -60°C absorption energy of 60 J or more, a brittle fracture rate of 33% or less, and a -80°C absorption energy of 50 J or more, each as an average of three measurements, this weld metal was rated as excellent in terms of low-temperature toughness.

Table 8

| No. | C | Si | Mn | Ti | Ni | B | Ca | N | O | Al | Cu | Cr | Mo | Nb | V | Rate of AF Formation (%) | Low-Temperature Toughness | | |
|---|---|---|---|---|---|---|---|---|---|---|---|---|---|---|---|---|---|---|---|
| | | | | | | | | | | | | | | | | | $vE_{-60}$ (J) | Brittle fracture rate at -60°C (%) | $vE_{-80}$ (J) |
| 57 | 0.068 | 0.25 | 1.90 | 0.061 | 2.41 | 0.0005 | 0.0005 | 0.0040 | 0.044 | | | | | | | 22 | 78 | 8 | 65 |
| 58 | 0.057 | 0.25 | 2.10 | 0.048 | 2.05 | 0.0008 | 0.0004 | 0.0041 | 0.045 | | | | | | | 20 | 78 | 7 | 62 |
| 59 | 0.071 | 0.24 | 2.10 | 0.055 | 2.67 | 0.0008 | 0.0008 | 0.0045 | 0.054 | | | 0.01 | | | | 27 | 73 | 0 | 60 |
| 60 | 0.077 | 0.26 | 1.88 | 0.056 | 2.51 | 0.0007 | 0.0005 | 0.0039 | 0.039 | 0.005 | | | | | | 26 | 71 | 0 | 62 |
| 61 | 0.078 | 0.25 | 1.96 | 0.045 | 1.51 | 0.0036 | 0.0011 | 0.0045 | 0.046 | 0.004 | | | | | 0.008 | 24 | 70 | 0 | 61 |
| 62 | 0.086 | 0.22 | 2.05 | 0.076 | 1.18 | 0.0022 | 0.0008 | 0.0045 | 0.047 | 0.004 | | | | | 0.008 | 16 | 68 | 27 | 53 |
| 63 | 0.097 | 0.24 | 1.86 | 0.048 | 2.57 | 0.0011 | 0.0006 | 0.0039 | 0.046 | 0.004 | 0.01 | 0.01 | 0.06 | | 0.008 | 21 | 72 | 0 | 60 |
| 64 | 0.080 | 0.21 | 2.21 | 0.066 | 2.40 | 0.0008 | 0.0021 | 0.0045 | 0.042 | 0.003 | | | | | 0.008 | 19 | 73 | 0 | 51 |
| 65 | 0.078 | 0.31 | 1.92 | 0.058 | 2.50 | 0.0016 | 0.0003 | 0.0036 | 0.050 | 0.004 | 0.01 | 0.02 | 0.13 | | 0.009 | 26 | 71 | 15 | 55 |
| 66 | 0.074 | 0.30 | 1.83 | 0.060 | 2.44 | 0.0016 | 0.0003 | 0.0035 | 0.049 | 0.004 | 0.01 | 0.02 | 0.14 | | 0.008 | 18 | 70 | 22 | 55 |
| 67 | 0.077 | 0.30 | 1.84 | 0.056 | 2.51 | 0.0015 | 0.0004 | 0.0040 | 0.050 | 0.004 | 0.01 | 0.02 | 0.14 | | 0.009 | 22 | 69 | 20 | 50 |
| 68 | 0.075 | 0.28 | 1.87 | 0.035 | 2.75 | 0.0016 | 0.0010 | 0.0075 | 0.052 | 0.008 | 0.01 | | 0.32 | | 0.008 | 17 | 62 | 22 | 54 |

Table 8 continued

| No. | C | Si | Mn | Ti | Ni | B | Ca | N | O | Al | Cu | Cr | Mo | Nb | V | Rate of AF Formation (%) | Low-Temperature Toughness | | |
|---|---|---|---|---|---|---|---|---|---|---|---|---|---|---|---|---|---|---|---|
| | | | | | | | | | | | | | | | | | $vE_{-60}$ (J) | Brittle fracture rate at -60°C (%) | $vE_{-80}$ (J) |
| 69 | 0.048 | 0.25 | 1.93 | 0.082 | 3.31 | 0.0011 | 0.0009 | 0.0063 | 0.051 | 0.009 | 0.11 | | | | 0.008 | 17 | 70 | 28 | 56 |
| 70 | 0.081 | 0.22 | 2.02 | 0.056 | 2.54 | 0.0008 | 0.0003 | 0.0046 | 0.061 | 0.005 | 0.02 | 0.45 | | | 0.008 | 17 | 62 | 23 | 55 |
| 71 | 0.098 | 0.29 | 2.18 | 0.042 | 2.11 | 0.0007 | 0.0055 | 0.0042 | 0.032 | | 0.01 | 0.02 | 0.05 | 0.008 | 0.008 | 17 | 62 | 25 | 51 |
| 72 | 0.115 | 0.25 | 2.15 | 0.055 | 2.40 | 0.0002 | 0.0035 | 0.0055 | 0.056 | 0.002 | 0.01 | 0.05 | | | 0.018 | 30 | 60 | 7 | 53 |
| 73 | 0.077 | 0.30 | 1.78 | 0.062 | 2.30 | 0.0015 | 0.0005 | 0.0052 | 0.049 | 0.004 | 0.01 | 0.02 | 0.14 | | 0.009 | 20 | 69 | 40 | 55 |
| 74 | 0.082 | 0.19 | 1.96 | 0.046 | 2.54 | 0.0014 | 0.0005 | 0.0047 | 0.048 | 0.004 | 0.01 | 0.02 | 0.09 | | 0.009 | 23 | 69 | 15 | 46 |
| 75 | 0.081 | 0.24 | 2.01 | 0.028 | 0.95 | 0.0011 | 0.0010 | 0.0046 | 0.048 | 0.004 | 0.01 | 0.02 | | | 0.008 | 9 | 61 | 40 | 32 |
| 76 | 0.077 | 0.26 | 2.05 | 0.095 | 2.30 | 0.0010 | - | 0.0042 | 0.042 | 0.012 | 0.01 | 0.02 | | | 0.008 | 11 | 32 | 47 | 21 |
| 77 | 0.077 | 0.33 | 1.88 | 0.050 | 2.30 | 0.0009 | 0.0006 | 0.0044 | 0.050 | 0.003 | 0.02 | 0.02 | | | 0.008 | 19 | 65 | 23 | 30 |
| 78 | 0.085 | 0.26 | 2.32 | 0.061 | 2.62 | 0.0008 | 0.0003 | 0.0051 | 0.048 | 0.004 | 0.01 | 0.02 | | | 0.008 | 20 | 45 | 35 | 27 |
| 79 | 0.061 | 0.26 | 1.96 | 0.047 | 2.10 | 0.0016 | 0.0005 | 0.0050 | 0.049 | 0.004 | 0.02 | 0.01 | | | 0.008 | 12 | 63 | 33 | 46 |

Example 73 was poor in low-temperature toughness, because the Mn amount in the wire was as low as 2.4% and the Mn amount in the weld metal was as low as 1.78%.

Example 74 was poor in low-temperature toughness, because the Si amount in the wire was as low as 0.17% and the Si amount in the weld metal was as low as 0.19%.

Example 75 was poor in low-temperature toughness, because the Ti amount in the wire was as low as 2.2%, the Ni amount in the wire was as low as 0.8%, the Ti amount in the weld metal was as low as 0.028%, the Ni amount in the weld metal was as low as 0.95% and the rate of acicular ferrite formation in the weld metal was as low as 9%.

Example 76 was poor in low-temperature toughness because the Ti amount in the wire was as high as 4.1% and the Ca amount in the wire was as low as 0.025% and the Ti amount in the weld metal was as high as 0.095%, Ca was not detected in the weld metal, and the rate of acicular ferrite formation in the weld metal was as low as 11%.

Example 77 was poor in low-temperature toughness, because the Si amount in the wire was as high as 0.37% and the Si amount in the weld metal as high as 0.33%.

Example 78 was poor in low-temperature toughness, because the Mn amount in the wire was as high as 3.4% and the Mn amount in the weld metal as high as 2.32%.

Example 79 was poor in low-temperature toughness, because the Li amount in the wire was as low as 0.005% and the rate of acicular ferrite formation in the weld metal was as low as 12%.

Meanwhile, the weld metals of Examples 57 to 72 had excellent low-temperature toughness.

While the invention has been described in detail and with reference to specific embodiments thereof, it is apparent to one skilled in the art that various changes and modifications can be made therein without departing from the spirit and scope of the invention. This application is based on Japanese Patent Application (Patent Application No. 2016-174096) filed on September 6, 2016, the entirety of which is incorporated herein by way of reference. In addition, all references cited herein are incorporated in their entirety.

## Claims

1. A flux-cored wire for gas-shielded arc welding, containing, based on total mass of the wire:

    C: from 0.03 to 0.12 mass%;
    Si in terms of Si in Si alloy and Si compound: from 0.20 to 0.70 mass%;
    Mn: from 1.0 to 4.0 mass%;
    Ti in terms of Ti in Ti alloy and Ti compound: from 2.4 to 4.5 mass%;
    Al: from 0.005 to 0.050 mass%;
    Li in terms of Li in Li alloy and Li compound: from 0.01 to 0.10 mass%;
    at least one of Ni: from 0.30 to 3.50 mass% and B: from 0.0008 to 0.012 mass%; and
    Fe: 80 mass% or more, and
    satisfying $Li/Si \geq 0.05$.

2. The flux-cored wire for gas-shielded arc welding according to Claim 1, further containing at least one member selected from the group consisting of, based on the total mass of the wire:

    $ZrO_2$: from 0.02 to 0.50 mass%; and
    $Al_2O_3$: from 0.02 to 0.80 mass%.

3. The flux-cored wire for gas-shielded arc welding according to Claim 1, further containing at least one member selected from the group consisting of, based on the total mass of the wire:

    Cu: 0.40 mass% or less;
    Cr: 1.0 mass% or less;
    Mo: 0.35 mass% or less:
    Nb: 0.030 mass% or less; and
    V: 0.050 mass% or less.

4. The flux-cored wire for gas-shielded arc welding according to Claim 1, further containing at least one member selected from the group consisting of, based on the total mass of the wire:

    a total of Na and K: 1.0 mass% or less; and
    Ca: 1.0 mass% or less.

5. The flux-cored wire for gas-shielded arc welding according to Claim 1, further containing, based on the total mass of the wire:

   Mg: 1.0 mass% or less.

6. The flux-cored wire for gas-shielded arc welding according to Claim 1, further containing, based on the total mass of the wire:
   F: 1.0 mass% or less.

7. The flux-cored wire for gas-shielded arc welding according to any one of Claims 1 to 6, containing both of Ni: from 0.80 to 3.50 mass% and B: from 0.0008 to 0.012 mass%.

8. A weld metal containing:

   C: from 0.04 to 0.12 mass%;
   Si: from 0.10 to 0.50 mass%;
   Mn: from 0.80 to 3.00 mass%;
   Ti: from 0.030 to 0.100 mass%;
   Al: from 0.002 to 0.010 mass%;
   O: from 0.030 to 0.070 mass%;
   N: more than 0 and 0.01 mass% or less; and
   at least one of Ni: from 0.30 to 3.50 mass% and B: from 0.0005 to 0.0070 mass%,
   with the remainder consisting of Fe and inevitable impurities,
   wherein oxide-based inclusions having a minor diameter of 1 μm or more contained in the weld metal satisfy the following requirements (1) and (2):

      (1) an average composition of the oxide-based inclusions having a minor diameter of 1 μm or more contained in the weld metal satisfies, by mass%,

$$Al_2O_3 + MnO + TiO_2 \geq 50\%;$$

      (2) the oxide-based inclusions having a minor diameter of 1 μm or more contained in the weld metal include a particle including an oxide phase having a cubic crystal structure.

9. The weld metal according to Claim 8, further containing at least one member selected from the group consisting of:

   Cu: 0.40 mass% or less;
   Cr: 1.0 mass% or less;
   Mo: 0.35 mass% or less;
   Nb: 0.020 mass% or less; and
   V: 0.050 mass% or less.

10. The weld metal according to Claim 8 or 9, containing both of Ni: from 0.80 to 3.50 mass% and B: from 0.0005 to 0.0070 mass%,
    wherein a rate of acicular ferrite formation defined by the following formula is 15% or more:

$$\text{Rate of acicular ferrite formation (\%)} = (\text{number of inclusions acting as a start point of acicular ferrite/number of all inclusions}) \times 100.$$

11. A flux-cored wire for gas-shielded arc welding, containing, based on total mass of the wire:

    C: from 0.03 to 0.12 mass%;
    Si in terms of Si in Si alloy and Si compound: from 0.20 to 0.36 mass%;
    Mn: from 2.5 to 3.3 mass%;
    Ti in terms of Ti in Ti alloy and Ti compound: from 2.4 to 4.0 mass%;
    Ni: from 1.00 to 3.50 mass%;

B: more than 0 and 0.012 mass% or less;
Ca: from 0.03 to 1.0 mass%;
Li in terms of Li in Li alloy and Li compound: from 0.01 to 0.10 mass%; and
Fe: 80 mass% or more.

12. The flux-cored wire for gas-shielded arc welding according to Claim 11, further containing at least one member selected from the group consisting of, based on the total mass of the wire:

$ZrO_2$: from 0.02 to 0.50 mass%; and
$Al_2O_3$: from 0.02 to 0.80 mass%.

13. The flux-cored wire for gas-shielded arc welding according to Claim 11, further containing at least one member selected from the group consisting of, based on the total mass of the wire:

Al: from 0.005 to 0.050 mass%;
Cu: 0.40 mass% or less;
Cr: 1.0 mass% or less;
Mo: 0.35 mass% or less;
Nb: 0.030 mass% or less;
V: 0.050 mass% or less.

14. The flux-cored wire for gas-shielded arc welding according to Claim 11, further containing, based on the total mass of the wire:
a total of Na and K: 1.0 mass% or less.

15. The flux-cored wire for gas-shielded arc welding according to Claim 11, further containing, based on the total mass of the wire:
Mg: 1.0 mass% or less.

16. The flux-cored wire for gas-shielded arc welding according to any one of Claims 11 to 15, further containing, based on the total mass of the wire:
F: 1.0 mass% or less.

17. A weld metal containing:

C: from 0.04 to 0.12 mass%;
Si: from 0.20 to 0.32 mass%;
Mn: from 1.80 to 2.30 mass%;
Ti: from 0.030 to 0.090 mass%;
Ni: from 1.00 to 3.50 mass%;
B: more than 0 and 0.0070 mass% or less;
Ca: from 0.0003 to 0.010 mass%;
N: more than 0 and 0.01 mass% or less;
O: from 0.030 to 0.070 mass%,
with the remainder consisting of Fe and inevitable impurities,
wherein a rate of acicular ferrite formation defined by the following formula is 15% or more:

$$\text{Rate of acicular ferrite formation (\%)} = (\text{number of inclusions acting as a start point of acicular ferrite/number of all inclusions}) \times 100.$$

18. The weld metal according to Claim 17, further containing at least one member selected from the group consisting of:

Al: from 0.002 to 0.010 mass%;
Cu: 0.40 mass% or less;
Cr: 1.0 mass% or less;
Mo: 0.35 mass% or less;

Nb: 0.020 mass% or less;
V: 0.050 mass% or less.

## INTERNATIONAL SEARCH REPORT

| | International application No. |
|---|---|
| | PCT/JP2017/032177 |

**A. CLASSIFICATION OF SUBJECT MATTER**
Int.Cl. B23K35/368 (2006.01)i, B23K35/30 (2006.01)i

According to International Patent Classification (IPC) or to both national classification and IPC

**B. FIELDS SEARCHED**

Minimum documentation searched (classification system followed by classification symbols)
Int.Cl. B23K35/368, B23K35/30, C22C38/00-38/60

| Documentation searched other than minimum documentation to the extent that such documents are included in the fields searched | |
|---|---|
| Japanese Published Examined Utility Model Applications | 1922-1996 |
| Japanese Published Unexamined Utility Model Applications | 1971-2017 |
| Japanese Examined Utility Model Registrations | 1996-2017 |
| Japanese Registered Utility Model Specifications | 1994-2017 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-508877 A (POSCO) 24 March 2016, & US 2015/0314397 A1 & WO 2014/104731 A1 & DE 112013006287 T5 & KR 10-2014-0084654 A & CN 104903046 A | 1-18 |
| A | JP 2010-274304 A (NIPPON STEEL CORP.) 09 December 2010, (Family: none) | 1-18 |
| A | JP 7-328795 A (NIPPON STEEL WELDING & ENGINEERING CO., LTD.) 19 December 1995, (Family: none) | 1-18 |

☒ Further documents are listed in the continuation of Box C.     ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 30 November 2017 (30.11.2017) | 12 December 2017 (12.12.2017) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

# EP 3 511 110 A1

| | INTERNATIONAL SEARCH REPORT | International application No. |
|---|---|---|
| | | PCT/JP2017/032177 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-68274 A (KOBE STEEL, LTD.) 27 March 2008, (Family: none) | 1-18 |
| A | JP 10-58186 A (SUMITOMO METAL INDUSTRIES, LTD.) 03 March 1998, (Family: none) | 1-18 |
| A | JP 2004-315962 A (KOBE STEEL, LTD.) 11 November 2004, (Family: none) | 1-18 |

Form PCT/ISA/210 (continuation of second sheet) (January 2015)

48

**EP 3 511 110 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000263283 A
- JP H03294093 A
- JP 2016174096 A